**Europäisches Patentamt**

**European Patent Office**

**Office européen des brevets**

(19)

(11) Veröffentlichungsnummer : **0 180 974**
**B1**

(12) **EUROPÄISCHE PATENTSCHRIFT**

(45) Veröffentlichungstag der Patentschrift :
**14.02.90**

(51) Int. Cl.⁵ : **G 01 P 5/10**, G 01 F 1/68

(21) Anmeldenummer : **85114098.8**

(22) Anmeldetag : **05.11.85**

(54) **Verfahren und Einrichtung zum Fühlen von Strömungsgeschwindigkeiten und/oder Durchflüssen.**

(30) Priorität : **06.11.84 DE 3440526**

(43) Veröffentlichungstag der Anmeldung :
**14.05.86 Patentblatt 86/20**

(45) Bekanntmachung des Hinweises auf die Patenterteilung : **14.02.90 Patentblatt 90/07**

(84) Benannte Vertragsstaaten :
**AT BE CH DE FR GB IT LI LU NL SE**

(56) Entgegenhaltungen :
**EP--A-- 0 103 150**
**WO--A--83 /002 27**
**BE--A--   728 883**
**DE--A-- 2 447 617**
**DE--A-- 2 934 566**
**DE--A-- 3 222 046**
**FR--A-- 2 411 392**
**US--A-- 2 924 972**

(73) Patentinhaber : **Bürkle, Walter**
**Kelterweg 29**
**D-7036 Schönaich (DE)**

(72) Erfinder : **Bürkle, Walter**
**Kelterweg 29**
**D-7036 Schönaich (DE)**

(74) Vertreter : **König, Oskar, Dr.-Ing. Dipl.-Phys.**
**Klüpfelstrasse 6 Postfach 10 27 33**
**D-7000 Stuttgart 1 (DE)**

Jouve, 18, rue St-Denis, 75001 Paris, France

## Beschreibung

Die Erfindung betrifft ein Verfahren gemäß dem ersten Teil des Anspruches 1 und eine Einrichtung zur Durchführung dieses Verfahrens.

Unter einem Fluidum oder Fluid ist eine Flüssigkeit, ein Gas oder Dampf verstanden. Der Durchfluß ist der Massenstrom oder Volumenstrom des Fluids.

Das Fühlen von Strömungsgeschwindigkeiten bzw. Durchflüssen ist vielfach notwendig. Die Erfindung bezieht sich dabei sowohl auf das Fühlen von Strömungsgeschwindigkeiten in Rohren, Kanälen, Gewässern od. dergl. als auch, wie bevorzugt vorgesehen, auf das Fühlen von Durchflüssen von Fluiden durch Kanäle, Leitungen od. dergl. insbesondere durch Rohre. Bei Strömungen vorgegebener Querschnitte kann man aus der Strömungsgeschwindigkeit den Durchfluß und umgekehrt ermitteln.

Der Durchfluß kann der Massenstrom oder ggfs. auch der Volumenstrom des betreffenden Fluids sein.

Aus der EP-A-0 103 150 ist eine Einrichtung zum Messen der Strömungsgeschwindigkeit eines Fluids bekannt, welche einen mindestens teilweise in das Fluid eintauchenden Körper aufweist, welcher Heizmittel zum Erhöhen der Temperatur des Körpers aufweist, welcher Körper auch mindestens einen Temperaturfühler zum Bestimmen der Temperatur des Körpers sowie einen zusätzlichen Temperaturfühler zum Bestimmen der Temperatur des Fluids im Bereich des Körpers umfaßt. Dieser Körper weist eine sich über seine Länge erstreckende metallische Außenhülse auf, die mit einem Material geringer Wärmeleitfähigkeit gefüllt ist, wobei in dieses Material im Abstand von der Hülse und voneinander die Heizmittel und der Temperaturfühler zum Fühlen der Temperatur des Körpers eingebettet sind. Der zusätzliche Temperaturfühler steht über die freie Stirnseite des Körpers in das Fluid über. Mittels dieses eine Sonde bildenden Körpers kann die Strömungsgeschwindigkeit des Fluids stationär oder instationär gemessen werden. Bei der stationären Messung ist die Heizung ständig eingeschaltet. Bei der instationären Messung wird dem Körper eine vorbestimmte Heizleistung während einer genau festgelegten kurzen Zeitdauer zugeführt. Daraufhin wird diejenige Abkühlzeitdauer bestimmt, bis der Temperaturunterschied zwischen dem Körper und der Temperatur des Fluids, welche mit dem zusätzlichen Temperaturfühler gemessen wird, einen vorgegebenen, kleinen Wert erreicht oder unterschritten hat. Diese Abkühlzeitdauer ist ein direktes Maß für die Strömungsgeschwindigkeit des Fluids. Diese Sonde ergibt jedoch nur sehr langsame Abkühlung, was die Meßgenauigkeit beeinträchtigt. Anstatt Heizmittel können auch Kühlmittel zum Kühlen der Sonde vorgesehen sein.

Ferner ist eine nach der instationären Meßmethode arbeitende Einrichtung zum Ermitteln der Strömungsgeschwindigkeit eines Fluids bekannt (WO-A-83/00 227), deren in das Fluid eingetauchte Sonde aus einem eigenbeheizten oder fremdbeheizten temperaturabhängigen Widerstand besteht. Die Strömungsgeschwindigkeit wird aus zwei gemessenen Zeitintervallen berechnet. Und zwar werden die Zeitspannen gemessen, die nach Aufheizen der Sonde auf eine vorbestimmte Temperatur verstreichen, bis sie sich auf zwei vorbestimmte unterschiedliche Temperaturwerte abgekühlt hat. Diese Einrichtung eignet sich nur für geringe Strömungsgeschwindigkeiten und arbeitet auch relativ ungenau. Anstelle des temperaturabhängigen Widerstandes kann auch ein Peltier-Element vorgesehen werden.

Ferner ist eine ebenfalls für die instationäre Meßmethode bestimmte Sonde bekannt (BE-A-0 728 883), die für nukleare Reaktoren bestimmt ist, um den Durchfluß eines Fluids zu ermitteln. Sie weist zwei von dem Fluid durchströmte Kammern auf, von denen eine Kammer die Meßkammer ist und einen Heizwiderstand und einen Temperaturfühler aufweist. Die andere Kammer dient als Kompensationskammer und enthält nur einen Temperaturfühler, der die Bezugstemperatur für die vom anderen Temperaturfühler gefühlte erhöhte Temperatur liefert. Diese Sonde ist kompliziert und nur bei völlig sauberen Fluida anwendbar.

Es ist Aufgabe der Erfindung, ein Verfahren der eingangs genannten Art zu schaffen, das sich unter Einsatz baulich einfacher Sonden durchführen läßt, welches ferner nicht auf geringe Strömungsgeschwindigkeits- bzw. Durchfluß-Bereiche beschränkt ist und recht genaues Fühlen der Strömungsgeschwindigkeit bzw. des Durchflusses ermöglicht.

Diese Aufgabe wird erfindungsgemäß durch das Verfahren nach Anspruch 1 gelöst. Eine erfindungsgemäße Einrichtung zur Durchführung dieses Verfahrens ist in Anspruch 18 beschrieben.

Dieses erfindungsgemäße Verfahren läßt sich mit sehr geringem Verbrauch an Wärmeenergie oder Kälteenergie (Kühlungsenergie) durchführen und liefert dennoch recht genaue Werte der Strömungsgeschwindigkeit bzw. des Durchflusses des betreffenden Fluids. Es läßt sich auch über recht große Bereiche der Strömungsgeschwindigkeit bzw. des Durchflusses anwenden und bedingt normalerweise nur vernachlässigbare Auswirkungen auf das Fluid, nämlich nur völlig unbedeutende Temperaturänderungen, die praktisch fast Null sein können, und nur geringen Strömungswiderstand oder je nach Anordnung und Ausbildung der Sonde sogar gar keinen Strömungswiderstand oder extrem geringen Strömungswiderstand. Die Sonde läßt sich baulich einfach realisieren. Auch benötigt dieses Verfahren nur sehr kurze Fluidstrecken.

Es sind zwar durch die DE-A-32 22 046 zwei Sonden für Strömungswächter bekannt, die zum Fluid führende Wärmeleitelemente aufweisen. Diese Sonden sind jedoch nur für die stationäre Meßmethode geeignet, d. h., daß die ihnen zugeordneten Heizungen im Betrieb ständig eingeschaltet sind. Sie dienen der Auslösung eines Signales bei Erreichen einer vorbestimmten Strömungsgeschwindigkeit. Die eine dieser beiden Sonden weist ein längeres, weit in das Strömungsmedium hineinragendes Wärmeleitelement auf, das ein Geräteteil durchdringt und auf seiner rückseitigen Stirnwand ein aufgeklebtes Keramikplättchen aufweist, auf dem nahe nebeneinander die Heizung und der Temperaturfühler angeordnet sind. Der Wärmeübergangswiderstand zwischen dem Wärmeleitelement und dem Temperaturfühler ist möglichst gering. Wenn die Heizung eingeschaltet wird, dann erwärmt sie zuerst den Temperaturfühler, so daß er rasch ungefähr auf seine Endtemperatur erwärmt wird, während der übrige Wärmestrom infolge des langen Wärmeleitelementes längere Zeit braucht, bis der Einfluß des Strömungsmediums auf den Wärmetransport wirksam wird. Der instationäre Temperaturanstieg des Temperaturfühlers ist also für die Auswertung der Strömungsgeschwindigkeit nicht geeignet. Bei der anderen Sonde befindet sich der Temperaturfühler in einer Höhlung des Wärmeleitelementes nahe einem an das Wärmeleitelement angesetzten, in dem Fluid befindlichen Strömungsfühlerelement. Hier steigt die vom Temperaturfohler gefühlte Temperatur des Wärmeleitelementes bereits bis in die Nähe der Endtemperatur an, bevor die Kühlung eines im Strömungsmedium befindlichen, an das Wärmeleitelement angesetzten Strömungsfühlerelementes wirksam wird, also bevor sich die Strömungsgeschwindigkeit auf die gefühlte Temperatur auswirken kann.

Das erfindungsgemäße Verfahren kann ohne weiteres so durchgeführt werden, daß es die Strömungsgeschwindigkeit bzw. den Durchfluß in absoluten oder relativen Zahlenwerten mißt. Es ist jedoch auch möglich, es so durchzuführen, daß es der Strömungsgeschwindigkeit bzw. dem Durchfluß entsprechende Signale, bspw. elektrische Signale liefert, deren Signalhöhe oder sonstiger Signalinhalt ein Maß für die Strömungsgeschwindigkeit bzw. den Durchfluß ist und daß diese Signale dann einer sie auswertenden oder weiterverarbeitenden Einrichtung oder dergl., vorzugsweise dem Multiplikator eines Wärmemengenzählers zugeleitet werden, in welchem Multiplikator aus ihnen durch Multiplikation mit einer Temperaturdifferenz von Vorlauf- und Rücklauffluid (Wasser, Dampf oder dergl.) einer Heizungs- oder Klimaanlage die jeweils momentane Wärmeleistung oder Kälteleistung ermittelt und die dann, über die Zeit integriert bspw. die während einer Heizperiode durch einen Heizkreis verbrauchte Wärmemenge ergibt.

Besonders einfach ist es, vorzusehen, daß die Sonde nur eine einzige Wärmequelle bzw. Kältequelle und/oder nur einen einzigen Temperaturfühler zum Fühlen der Sondentemperatur aufweist. Die Kältequelle kann man auch als Wärmesenke bezeichnen.

Jedoch läßt sich in vielen Fällen die Genauigkeit des Fühlens der Strömungsgeschwindigkeit bzw.

des Durchflusses noch dadurch erhöhen, daß die Temperatur der Sonde an mindestens zwei im Abstand voneinander angeordneten Stellen der Sonde durch Temperaturfühler gefühlt und für die der Ermittlung der Strömungsgeschwindigkeit bzw. des Durchflusses des Fluids dienende Sondentemperatur ein Mittelwert der von den Temperaturfühlern gefühlten Temperaturen verwendet wird. Zu demselben Zweck kann die Sonde in manchen Fällen auch mehr als eine einzige Wärme- bzw. Kältequelle für die der Sonde für den Fühlvorgang der Strömungsgeschwindigkeit bzw. des Durchflusses des Fluids zuzuführenden bzw. aus ihr abzuführenden Wärme auf weisen.

Für den einzelnen Fühlvorgang der Strömungsgeschwindigkeit bzw. des Durchflusses kann zweckmäßig von einer vorbestimmten gefühlten Anfangstemperatur der Sonde ausgegangen werden, bei der die für den Fühlvorgang erforderliche Beheizung bzw. Kühlung der Sonde beginnt. Diese vorbestimmte Anfangstemperatur kann vorzugsweise der Temperatur des Fluids zu Beginn des Fühlvorganges entsprechen. Dies macht es jedoch nach jedem Fühlvorgang der Strömungsgeschwindigkeit bzw. des Durchflusses erforderlich, bis zur Durchführung des nächsten Fühlvorganges zumindest so lange zuzuwarten, bis die gefühlte Temperatur der Sonde sich wieder der Temperatur des Fluids angeglichen hat. Wenn es erwünscht ist, in kürzeren Zeitabständen Fühlvorgänge der Strömungsgeschwindigkeit bzw. des Durchflusses vorzunehmen, kann dies zweckmäßig auf die Weise vorgenommen werden, daß zum Zeitpunkt des Beginns der Beheizung bzw. Kühlung der Sonde für den einzelnen Fühlvorgang die gefühlte Temperatur der Sonde von der Temperatur des Fluids abweicht, vorzugsweise mit vorbestimmter Differenz, bei deren Eintreten jeweils ein Fühlvorgang beginnt oder die mit Hilfe von Heiz- oder Kühlleistung der Wärme- bzw. Kältequelle zwischen zwei Fühlvorgängen geregelt werden kann. Um im Gefolge jedes einzelnen Fühlvorganges der Strömungsgeschwindigkeit bzw. des Durchflusses möglichst rasche Angleichung der gefühlten Temperatur der Sonde an die Fluidtemperatur zu erreichen, kann man die Sonde zweckmäßig sehr klein mit geringer Wärmekapazität bauen und sie ferner zweckmäßig innerhalb des Fluids anordnen, so daß sie allseitig von dem Fluid umspült ist mit Ausnahme des oder der Bereiche, an denen sie mit Streben oder dgl. mit der sie tragenden Rohrwandung oder einem sonstigen Träger verbunden ist.

Es ist jedoch auch möglich, die Sonde an oder in der Wandung des Kanals, der Leitung oder des Rohres für das Fluid so anzuordnen, daß sie mindestens eine vom Fluid benetzte Fläche aufweist, die dann allein oder im wesentlichen dem Wärmeaustausch zwischen Sonde und Fluid dienen kann. Der restliche Oberflächenbereich der Sonde kann dann vorzugsweise gut wärmeisoliert sein. Durch eine solche Ausbildung wird der Strömungswiderstand der Sonde besonders gering oder, wenn sie bündig mit der betreffenden Wand des Kanales, der Leitung des Rohres oder dergl. für das Fluid verbunden ist, sogar Null.

Ein einzelner Fühlvorgang zum Fühlen der Strömungsgeschwindigkeit bzw. des Durchflusses benötigt bei dem erfindungsgemäßen Verfahren nur wenig Zeit. Diese kann vorzugsweise weniger als eine Minute betragen vorzugsweise weniger als 30 Sekunden betragen. Bei räumlich sehr kleinen Sonden geringer Wärmekapazität kann man sogar mit nur einigen wenigen Sekunden Zeitdauer pro Fühlvorgang oder sogar noch weniger rechnen. So ist es in manchen Fällen bei räumlich sehr kleinen Sonden auch möglich, daß der einzelne Fühlvorgang der Strömungsgeschwindigkeit bzw. des Durchflusses sogar weniger als eine Sekunde betragen kann, oft sogar weniger als 1/2 Sekunde.

Die Erfindung ist insbesondere für Fluida geeignet, deren Strömungsgeschwindigkeit bzw. Durchfluß sich nicht fortlaufend rasch ändert, sondern nur selten oder nur langsam ändert, wie es bspw. bei den Wärmeträgerfluiden bei Heizungsanlagen und/oder Klimaanlagen der Fall ist. Die Erfindung kann jedoch auch zahlreiche andere Anwendungsgebiete haben, bspw. die chemische Verfahrensindustrie, kommunale Abwasseranlagen, Messungen in Gewässern aller Art usw., wo es nicht auf kontinuierliches Fühlen der Strömungsgeschwindigkeit bzw. des Durchflusses ankommt, sondern sich periodisch oder zyklisch wiederholende Fühlvorgänge oder Fühlvorgänge in sonstigen Zeitabständen ausreichend sind. Auch eignet sich das erfindungsgemäße Verfahren für Fluida mit sehr großen Geschwindigkeitsbereichen.

Das erfindungsgemäße Verfahren zeichnet sich auch dadurch aus, daß die Sonde keine mechanisch bewegten Teile benötigt, betriebssicher ist und keinem Verschleiß unterliegt. Auch läßt sie sich problemlos verschmutzungsunempfindlich ausbilden, bspw. durch Überziehen ihrer Oberfläche oder zumindest des oder der Bereiche, die mit dem Fluid in Kontakt kommen, mit einer schmutzabweisenden Beschichtung, oder von Zeit zu Zeit reinigen. Das erfindungsgemäße Verfahren läßt sich nicht nur für reine Fluida sondern auch für Unreinheiten enthaltende Fluida wie Heizungswasser oder dergl., einsetzen.

Die Beheizung bzw. Kühlung der Sonde mit vorbestimmter Dosierung der zuzuführenden oder zu entziehenden Wärme bzw. mit vorbestimmter Heiz- oder Kühlleistung zwecks Durchführung des einzelnen Fühlvorganges der Strömungsgeschwindigkeit bzw. des Durchflusses des Fluids kann auf unterschiedliche Weise erfolgen, vorzugsweise elektrisch, in manchen Fällen aber auch nicht elektrisch bspw. mittels eines Wärmeträgermediums. Die vorbestimmte Dosierung kann im Zuführen bzw. Entziehen einer vorbestimmten, konstanten oder von mindestens einer Variablen, wie der Fluidtemperatur abhängigen Wärmemenge während des betreffenden Fühlvorganges bestehen. Bei einer bevorzugten Ausführungsform ist vorgesehen, daß die Beheizung bzw. Kühlung der Sonde für den einzelnen Fühlvorgang durch kurzzeitige, impulsartige Zufuhr einer vorbestimmten Wärmemenge oder kurzzeitigen, impulsartigen Entzug einer vorbestimmten Wärmemenge erfolgt. Die Zufuhr bzw. der Entzug der Wärme zur oder aus der Sonde kann insbesondere mittels mindestens eines mit elektrischem Strom gespeisten Heiz- oder Kühlelementes erfolgen, wie eines Heizdrahtes, eines Peltierelementes oder dergl., und die Zufuhr bzw. Abfuhr der durch dieses Element zu erzeugenden bzw. abzuführenden Wärmemenge kann dann vorzugsweise durch kurzzeitiges Einschalten einer elektrischen Strom- oder Spannungsquelle erfolgen. Diese Strom- oder Spannungsquelle kann eine Konstantstromquelle oder eine Spannungsquelle konstanter Spannung oder auch alternierender Spannung sein. Auch kann der dieses wärmezuführende oder wärmeentziehende, elektrisch gespeiste Element beaufschlagende Strom durch die Entladung eines vorher auf eine vorbestimmte Spannung aufgeladenen Kondesators erfolgen, so daß dieses Element durch eine vorbestimmte elektrische Energiemenge zur impulsartigen Zufuhr einer vorbestimmten Wärmemenge oder impulsartigem Entzug einer vorbestimmten Wärmemenge in die Sonde bzw. aus der Sonde beaufschlagbar ist. Die vorbestimmte Wärmemenge oder, falls die mindestens eine Wärme- bzw. Kältequelle der Sonde mit vorbestimmter Heiz- bzw. Kühlleistung Wärme zuführt oder entzieht, diese Heiz- bzw. Kühlleistung kann vorzugsweise konstant, oder- in manchen Fällen auch zweckmäßig abhängig von mindestens einer Variablen, vorzugsweise von der Fluidtemperatur sein, bspw. zum Kompensieren des Einflusses der Fluidtemperatur.

Ferner sieht eine vorteilhafte Weiterbildung des erfindungsgemäßen Verfahrens vor, daß die Beheizung bzw. Kühlung der Sonde für den einzelnen Fühlvorgang mittels eines vorbestimmten zeitlichen Verlaufs der ihrer Beheizung bzw. Kühlung dienenden Heizleistung bzw. Kühlleistung (Kälteleistung) ihrer mindestens einen Wärmebzw. Kältequelle erfolgt, vorzugsweise mit konstanter Heiz- oder Kühlleistung. Die Zufuhr bzw. der Entzug von Wärme in die bzw. aus der Sonde während des einzelnen Fühlvorganges kann mittels geeigneter Schalt-, Steuer- bzw. Regelmittel in der jeweils vorgesehenen Dosierung bzw. mit der jeweils vorgesehenen Heiz- oder Kühlleistung erfolgen.

Die Beheizung bzw. Kühlung der Sonde kann für den einzelnen Fühlvorgang für eine vorbestimmte Zeitdauer durchgeführt werden. Es ist jedoch auch möglich, die Beheizung bzw. Kühlung der Sonde mit variabler Zeitdauer durchzuführen. So kann bspw. in vielen Fällen zweckmäßig vorgesehen sein, daß bei der Durchführung eines Fühlvorganges der Strömungsgeschwindigkeit bzw. des Durchflusses die Sonde mit vorbestimmter Heizleistung bzw. Kühlleistung so lange beheizt bzw. gekühlt wird, bis die Sondentemperatur um einen vorbestimmten Betrag geändert ist und daß dann die Kühlung bzw. Beheizung der Sonde bis zur Durchführung des nächsten Fühlvorganges abgeschaltet wird.

Die Auswertung des während des einzelnen Fühlvorganges durch die Beheizung bzw. Kühlung der Sonde auftretenden Sondentemperaturverlaufes für die Ermittlung der Strömungsgeschwindigkeit bzw. des Durchflusses kann bei dem erfindungsgemäßen Verfahren auf irgendeine geeignete Weise erfolgen. Damit nach Beginn eines Fühlvorganges nach besonders kurzer Zeit schon auf die Strömungsgeschwindigkeit bzw. den Durchfluß des Fluids geschlossen werden kann, kann man vorsehen, daß auf die Strömungsgeschwindigkeit bzw. den Durchfluß aus dem noch während der Beheizung bzw. Kühlung der Sonde oder gegen Ende der Beheizung bzw. Kühlung stattfindenden Sondentemperaturverlauf geschlossen wird. Die Genauigkeit des Fühlens der Strömungsgeschwindigkeit bzw. des Durchflusses kann jedoch in vielen Fällen noch dadurch weiter erhöht werden, indem man vorsieht, daß bei dem einzelnen Fühlvorgang auf die Strömungsgeschwindigkeit bzw. den Durchfluß des Fluids aus dem nach Beendigung der Beheizung bzw. Kühlung der Sonde stattfindenden Sondentemperaturverlauf oder sowohl aus dem während der Beheizung oder Kühlung als auch dem anschließenden instationären Sondentemperaturverlauf geschlossen wird. Dies ist auch dann zweckmäßig, wenn die Beheizung bzw. die Kühlung der Sonde nur sehr kurzzeitig impulsartig erfolgt.

Aus dem Sondentemperaturverlauf kann auf unterschiedliche Weise auf die Strömungsgeschwindigkeit bzw. den Durchfluß des Fluids geschlossen werden, vorzugsweise anhand eines Kennlinienfeldes des Sondentemperaturverlaufes, das als mindestens einen Parameter die Strömungsgeschwindigkeit bzw. den Durchfluß hat und ggfs. noch weitere Parameter aufweisen kann, wie die Fluidtemperatur und dergl., soweit dies erforderlich oder zweckmäßig ist. Auch Einsatz einer einzigen Kennlinie ist oft vorteilhaft.

Besonders zweckmäßig ist es, bei einem einzelnen Fühlvorgang nur aus wenigen Daten, vorzugsweise nur aus ein oder zwei Daten des Sondentemperaturverlaufes auf die Strömungsgeschwindigkeit bzw. den Durchfluß des Fluids zu schließen. Vorzugsweise können dies bei zwei Daten eine Temperaturdifferenz und die zu ihrem Durchlaufen benötigte Zeitdauer und bei einem einzigen Datum die max. Temperaturdifferenz des Sondentemperaturverlaufs während des jeweiligen Fühlvorganges sein.

Dies kann auf unterschiedliche Weise erfolgen. Einige bevorzugte Ausführungsformen, die mit einer Temperaturdifferenzmessung und eine Zeitmessung auskommen, sind in den Ansprüchen 8 und 10 beschrieben. Man kann sogar für einen einzelnen Fühlvorgang aus einer reinen Temperaturmessung ohne Zeitmessung, nämlich der während des betreffenden Fühlvorganges auftretenden maximalen Veränderung der Sondentemperatur auf die Strömungsgeschwindigkeit bzw. den Durchfluß des Fluids schließen und benötigt bei dieser Weiterbildung des Verfahrens also nicht einmal eine Zeitmessung.

Es gibt auch noch andere Weiterbildungen des erfindungsgemäßen Verfahrens, die aus dem Sondentemperaturverlauf während eines einzelnen Fühlvorganges auf die Strömungsgeschwindigkeit bzw. den Durchfluß schließen lassen und erwünschtenfalls auch zahlenmäßige Meßergebnisse liefern können. So kann gemäß einer Weiterbildung dieser Art vorgesehen sein, daß eine vorbestimmte Zeitdauer nach Beginn der Beheizung bzw. Kühlung der Sonde für den betreffenden Fühlvorgang der am Ende dieser Zeitdauer herrschende Temperaturgradient $dT/dt$, wo $T$ die Sondentemperatur und $t$ die Zeit ist, erfaßt und aus diesem Temperaturgradienten auf die Strömungsgeschwindigkeit bzw. den Durchfluß des Fluids geschlossen wird. Dabei kann man auch vorsehen, anstatt dem Differentialquotienten $dT/dt$ einen Gradienten $\Delta T/\Delta t$ zu wählen, wo $\Delta T$ eine geringe Temperaturdifferenz des Sondentemperaturverlaufes und $\Delta t$ die zum Durchlaufen von $\Delta T$ verstrichene Zeitspanne ist. Anstatt dieser ersten zeitlichen Ableitung $dT/dt$ bzw. $\Delta T/\Delta t$ kann auch eine höhere zeitliche Ableitung, vorzugsweise $d^2T/dt^2$, in manchen Fällen zur Identifizierung des momentanen zeitlichen Sondentemperaturverlaufes und damit von dessen Parameter $v$ bzw. $D$ vorgesehen werden.

Anstatt während eines Fühlvorganges nur einmal die Strömungsgeschwindigkeit bzw. den Durchfluß zu ermitteln, kann auch die Maßnahme nach Anspruch, 7 vorgesehen sein, welche die Genauigkeit des erfindungsgemäßen Verfahrens noch weiter zu erhöhen gestattet durch Verringerung der Streuung und der Auswirkungen von Meßfehlern.

Es sei noch erwähnt, daß sich das erfindungsgemäße Verfahren besonders gut auch zum Ermitteln der Strömungsgeschwindigkeit bzw. des Durchflusses eines Fluids in vorbestimmten Zeitabständen eignet, wobei die Strömungsgeschwindigkeit bzw. der Durchfluß des Fluids zu steuern oder zu regeln ist oder aus sonstigen Gründen, vorzugsweise für Wärmemengenzählung, zu ermitteln ist.

Es sei noch erläutert, daß unter dem Ausdruck « Kältequelle » verstanden ist, daß sie durch mindestens ein diese Kältequelle bildendes Element oder dergl., z. B. ein Peltierelement, gebildet ist, das der Sonde Wärme entziehen kann.

In der Zeichnung sind Ausführungsbeispiele der Erfindung dargestellt. Es zeigen :

Fig. 1 eine Einrichtung zum Fühlen der Strömungsgeschwindigkeit bzw. des Durchflusses eines in einem Rohr strömenden Fluids gemäß einem Ausführungsbeispiel der Erfindung,

Fig. 2 eine Sonde in geschnittener Darstellung gemäß einem weiteren Ausführungsbeispiel der Erfindung,

Fig. 3 bis 6 je ein Diagramm zur Erläuterung möglicher Arbeitsweisen der Einrichtung nach Fig. 1,

Fig. 7 ein Ausführungsbeispiel eines Wärmemengenzählers, der unter Einsatz einer Einrichtung zur Durchflußmessung gemäß einem Ausführungsbeispiel der Erfindung arbeitet,

Fig. 8 eine Sondenanordnung gemäß einem weiteren Ausführungsbeispiel der Erfindung,

Fig. 9 eine Sonde gemäß einem weiteren Ausführungsbeispiel der Erfindung in geschnittener Darstellung,

Fig. 10 ein weiteres Diagramm einer möglichen Arbeitsweise der Einrichtung nach Fig. 1,

Fig. 11 eine Sonde gemäß einem weiteren Ausführungsbeispiel der Erfindung in geschnittenen Seitenansicht,

Fig. 12 einen Schnitt durch die Sonde nach Fig. 11 gesehen entlang der Schnittlinie 18-18.

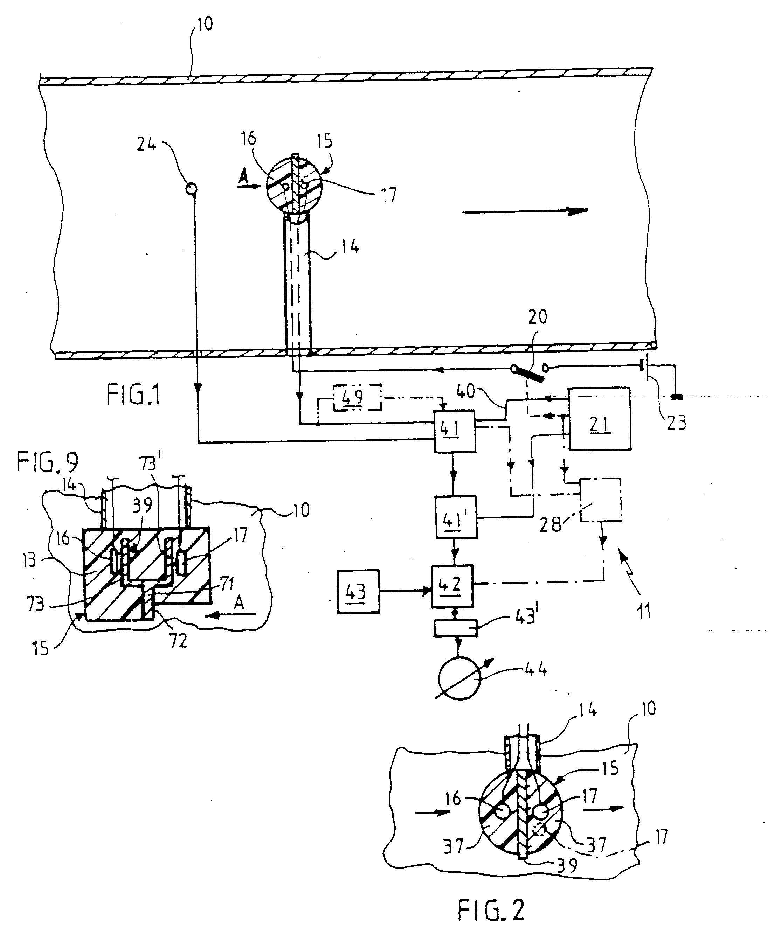

Die in Fig. 1 und 2 dargestellte Einrichtung 11 zum Fühlen der Strömungsgeschwindigkeit bzw. des Durchflusses eines in einem Rohr 10 strömenden Fluids bei dem es sich vorzugsweise um Flüssigkeit, aber ggfs. auch um Gas oder Dampf handeln kann, weist eine Sonde 15 auf, die an einer schmalen, stromlinienförmigen, ggf. wärmeisolierenden Strebe 14 fest angeordnet ist, die an der Wandung des Rohres 10 fest angeordnet ist. Die Sonde 15 weist einen aus zwei Halbkügeln 37, 37 bestehenden Körper aus Wärme schwach leitenden Kunststoff, Keramik oder dergl., auf, in den eine Wärmequelle 16 und ein Temperaturfühler 17 im Abstand von bspw. einigen Millimetern voneinander eingebettet sind. Diese Sonde 15 kann sehr klein sein, bspw. einen Durchmesser von 0,5 bis 2 cm haben, jedoch auch noch kleiner oder noch größer sein. In vielen Fällen kann sie vorteilhaft auch stromlinienförmig gestaltet sein oder auch sonstige andere Gestalt aufweisen. Die tragende Strebe 14 hat geringen Strömungswiderstand. Auch der Strömungswiderstand der Sonde 15 ist schon wegen ihrer Kleinheit nur gering. Ihre Länge kann bspw. 0,5 bis 3 cm oder auch mehr oder noch weniger betragen. Die Wärmequelle 16, die also eine Energiequelle für Wärme ist, kann vorzugsweise ein körperlich sehr kleiner elektrischer Heizwiderstand oder eine andere elektrisch beheizbare Wärmequelle sein, die genau definierbar Wärme abgeben kann. Ihre elektrische Leistung braucht nur gering zu sein und kann vorzugsweise ein oder mehrere Watt oder auch weniger oder mehr betragen. Der Temperaturfühler 17 kann vorzugsweise ein temperaturabhängiger, elektrischer Widerstand, vorzugsweise ein NTC- oder PTC-Element, eine aktive integrierte temperaturempfindliche Halbleiterschaltung oder dergl., von vorzugsweise ebenfalls sehr kleiner räumlicher Gestalt sein. Diese Wärmequelle 16 leitet die gesamte, von ihr erzeugte Wärme in die Sonde 15 ein.

Die Wärmequelle 16 dient dazu, eine der Sonde 15 zur Durchführung eines jeweiligen Fühlvorganges der Strömungsgeschwindigkeit bzw. des Durchflusses in vorbestimmter Dosierung und/ oder mit vorbestimmter Heizleistung Wärme zuzuführen. Falls erwünscht kann die Sonde auch mehr als eine Wärmequelle aufweisen.

Die beiden Halbkugeln der in Fig. 2 näher dargestellten Sonde 15 sind durch ein als metallischer Wärmeleiter 39 dienendes dünnes Metallplättchen aus gut wärmeleitendem Metall, vorzugsweise aus Kupfer, miteinander verbunden.

Dieses Plättchen 39 kann zweckmäßig etwas über die Halbkugeln 37 hinaus in das Fluid vorstehen. In der einen Halbkugel 37 ist die Wärmequelle 16 und in der anderen Halbkugel 37 der für das Fühlen des Sondentemperaturverlaufes erforderliche Sondentemperaturfühler 17 eingebettet. Falls die Gefahr besteht, daß sich an dieser Sonde Schmutz absetzt, der den Wärmeübergang zwischen ihr und dem Fluid verändern könnte, kann diese Sonde 15 mit einer dünnen schmutzabweisenden Schicht überzogen sein. Das Plättchen 39, von dem die Wärmequelle 16 und der Fühler 17 nur geringe Abstände haben, bewirkt besonders starke Abhängigkeit der Sondentemperaturverläufe von v bzw. D.

Um die pro Fühlvorgang aufzuwendende Heizenergie noch weiter zu verringern und ggfs. die Temperaturspreizung der Sondentemperaturverläufe noch weiter zu vergrößern, kann auch vorgesehen sein, die beiden Halbkugeln 37 durch äußere Wärmeisolierungen wärmezuisolieren, nicht jedoch den in das Fluid überstehenden Bereich des metallischen Wärmeleiters 39, so daß die bei einem einzelnen Fühlvorgang von der Wärmequelle 16 in das Fluid strömende Wärme im wesentlichen oder ausschließlich nur durch den metallischen Wärmeleiter 39 hindurch in das Fluid gelangen kann. Ein kleiner Teil der Wärme kann ggfs. auch durch die elektrischen Leitungsdrähte nach außen abfließen, die dem elektrischen Anschluß der Wärmequelle 16 und des Temperaturfühlers 17 dienen, was jedoch, falls erwünscht, auch ganz oder im wesentlichen verhindert werden kann, bspw. durch sehr dünne Leitungsdrahtstücke, durch ihr Verlegen durch das Fluid hindurch od. dergl., was die Meßgenauigkeit erhöht.

Anstatt die Teile 37 der Sonde nach Fig. 2 halbkugelförmig zu gestalten, können auch andere Gestaltungen vorgesehen sein, bspw. oft zweckmäßig ungefähr quaderförmige Gestaltungen oder dergl.

Anstatt der Wärmequelle 16, die also in eingeschaltetem Zustand Temperaturen erzeugt, die über der Temperatur des im Rohr 10 In Pfeilrichtung strömenden Fluids liegen, kann in vielen Fällen vorteilhaft auch mindestens eine Kältequelle, d. h. mindestens eine « Wärmesenke », innerhalb der Sonde 15 angeordnet sein und ihr bei dem einzelnen Fühlvorgang in vorbestimmter Dosierung und/oder mit vorbestimmbarer Kühlleistung Wärme entziehen, also in ihr Kälte erzeugen. Bei der weiteren Beschreibung wird die Komponente 16 als Wärmequelle angenommen, obwohl, wie dargelegt, die Erfindung hierauf nicht beschränkt ist.

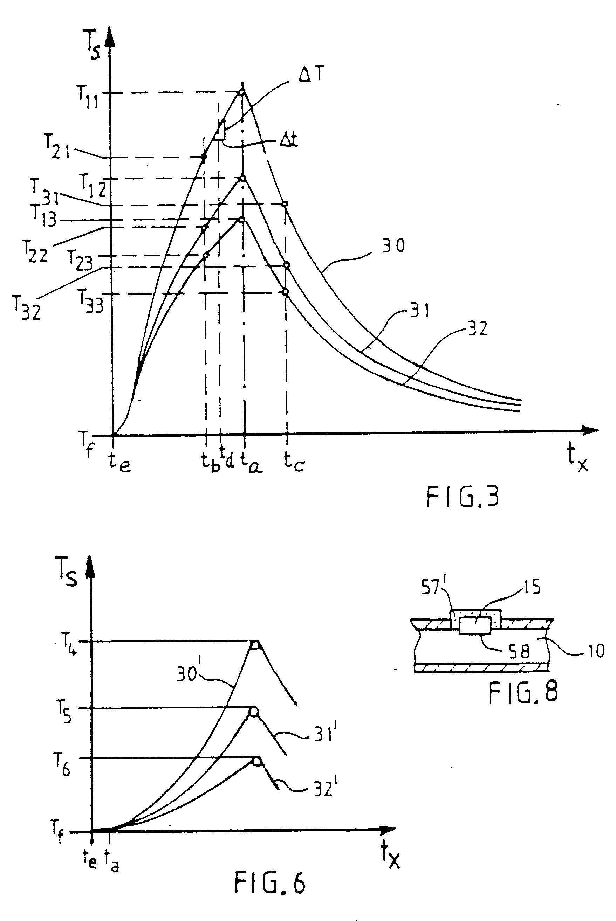

Die Wärmequelle 16 ist über einen Ein- und Aus-Schalter 20 an eine Spannungsquelle 23 konstanter Spannung, hier an eine Gleichstromquelle angeschlossen, die also durch Schließen des Schalters 20 die Wärmequelle 16 mit Strom konstanter Spannung speist, so daß die Heiz- oder Wärmeleistung dieser Wärmequelle 16 bei geschlossenem Schalter 20 konstant ist, wobei angenommen ist, daß der elektrische Widerstand der Quelle 16 temperaturunabhängig ist. In manchen Fällen kann auch vorgesehen sein, die Wärmeleistung der Wärmequelle bzw. ihren Energieverbrauch zeitlich in vorbestimmter Weise zu ändern, bspw. gemäß einem Zeitprogramm stetig zu erhöhen und/oder zu erniedrigen, um die instationären Sondentemperaturverläufen entsprechenden Temperaturkurven (30-32), wie sie in den Diagrammen nach den Fig. 3 und 4 an einem Ausführungsbeispiel dargestellt sind, in irgendeiner gewünschten Weise zu beeinflussen, bspw. im Anstieg zu linearisieren oder als Stromquelle eine Wechselstromquelle vorzusehen. Oder es kann oft zweckmäßig auch vorgesehen sein, die Wärmequelle 16 für jeden einzelnen Fühlvorgang der Strömungsgeschwindigkeit bzw. des Durchflusses des Fluids impulsartig mit einer vorbestimmten elektrischen Energiemenge zu speisen zur impulsartigen Abgabe einer entsprechenden Wärmemenge in die Sonde 15, was bspw. durch rasches Entladen eines vorher auf eine vorbestimmte konstante Spannung aufgeladenen Kondensators erfolgen kann.

Anstelle der Spannungsquelle 23 konstanter Spannung kann oft mit Vorteil auch eine Stromquelle vorgesehen sein, die auf Lieferung konstanter elektrischer Leistung gesteuert oder geregelt wird, um eine eventuelle Temperaturabhängigkeit des elektrischen Widerstandes der Wärmequelle 16 zu kompensieren, oder die Wärmequelle 16 weist eine Steuerung oder Regelung für ihre Heizleistung auf. Die vom Temperaturfühler 17 gefühlte Eigentemperatur der Sonde sei mit $T_a$ und die von einem Temperaturfühler 24 gefühlte Fluidtemperatur mit $T_f$ bezeichnet. Die auf die momentane Fluidtemperatur bezogene Sondentemperatur $T_s$ ist dann $T_s = T_a - T_f$. Die Sonde 15 erzeugt, wenn der Schalter 20 geschlossen wird, zusammen mit dem Temperaturfühler 24 die Sondentemperaturverläufe $T_s$, deren Parameter die Strömungsgeschwindigkeit v bzw. der Durchfluß D des Fluids im bzw. durch das Rohr 10 hindurch ist, d. h., daß jedem solchen Sondentemperaturverlauf ein bestimmter, konstanter Wert für v bzw. D zugeordnet ist.

In den Diagrammen nach Fig. 3, 4 und 6 sind Kennlinienfelder $T_s = f(t_x)$ mit dem Parameter v bzw. D dargestellt, wobei in jedem Diagramm jeweils drei unterschiedliche, instationäre Sondentemperaturverläufe als Kurven 30, 31, 32 bzw. 30', 31', 32' eingezeichnet sind, deren Parameter v bzw. D beispielsweise im Verhältnis von 1:2:3 zueinander stehen. Diese Kurven wurden an einem Versuchsmodell experimentell aufgenommen. Die Kurve 30 ist die des kleinsten konstanten Wertes für v bzw. D und die Kurve 32 entsprechend die des höchsten konstanten Wertes für v bzw. D. Es können natürlich noch wesentlich mehr solche instationäre Sondentemperaturverläufe mit anderen pro Kurve konstanten Werten für die Parameter v bzw. D aufgenommen werden, bspw. auch für noch höhere und noch kleinere Werte von v bzw. D, und man kann zwischen benachbarten Kurven noch interpolieren, so daß man aus jedem solchen Kennlinienfeld für eine bestimmte Einrichtung zum diskontinuierlichen Fühlen von v bzw. D für jedes während eines einzelnen solchen Fühlvorganges ermittelte Wertepaar $T_s$, $t_x$ aus der instationären Sondentemperaturverlaufskurve, auf der dieses Wertepaar als Punkt liegt, die bei diesem Fühlvorgang vorliegende momentane Strömungsgeschwindigkeit v bzw. den momentanen Durchfluß D ersehen kann, gleichgültig an welcher Stelle dieser Kurve das betreffende Wertepaar liegt.

Dabei ist die momentane Sondentemperatur $T_s$ auf die momentane, vom Fühler 24 gefühlte Fluidtemperatur $T_f$ bezogen, indem die Differenz $T_a - T_f$ in einem Glied 41 ununterbrochen gebildet wird. Bspw. liegt bei dem Diagramm nach Fig. 3 das Wertepaar $T_{21}$, $t_b$ auf der Kurve 30, so daß dann bei diesem Fühlvorgang, der dieses Wertepaar erbrachte, der momentane Wert v bzw. D des Fluids der Größe dieses Parameters v bzw. D der Kurve 30 entspricht.

Gegebenenfalls können die Sondentemperaturverläufe noch mindestens einen weiteren Parameter berücksichtigen und das entsprechende Kennlinienfeld entsprechend Kennlinienscharen mit mehreren Parametern aufweisen. Bspw. kann ein weiterer Parameter die Art des Fluids (wenn unterschiedliche Fluida oder Fluida unterschiedlichen Drucks oder dergl. das Rohr 10 durchströmen) oder die von dem Temperaturfühler 24 stromaufwärts der Sonde 15 gefühlte Temperatur des Fluids sein, falls die Temperatur des Fluids als Parameter mit zu berücksichtigen ist.

Die Einrichtung nach Fig. 1 ist ohne weiteres geeignet für Fluida deren Temperatur $T_f$ sich während des nur jeweils kurzen Fühlvorganges nicht oder nicht störend ändert. Oder es kann bspw. bei Wärmemengenmessungen vorgesehen sein, Fühlvorgänge abzubrechen oder ihre Auswertung zu negieren, bei denen sich die Fluidtemperatur störend ändert bzw. geändert hat. Oder man kann die Änderung der Fluidtemperatur in ihrer Auswirkung auf v bzw. D bei der Auswertung kompensieren oder rechnerisch berücksichtigen usw. Auch andere Möglichkeiten bestehen.

Anstatt eines solchen Wertepaares $T_s$, $t_x$ können auch mehrere oder beliebig viele solcher Wertepaare des während jeweils eines Fühlvorganges stattfindenden Sondentemperaturverlaufes für die Ermittlung des ihm zugeordneten Wertes von v bzw. D ausgewertet werden. Es kann oft auch zweckmäßig vorgesehen sein, daß jeweils mindestens ein Bereich, d. h. mindestens ein Abschnitt oder der gesamte Bereich des für den betreffenden Fühlvorgang durch Beheizung bzw. Kühlung der Sonde bewirkten Sondentemperaturverlaufes auf v bzw. D ausgewertet wird. Es besteht u. a. auch die Möglichkeit, den gesamten, für einen Fühlvorgang durch Beheizung oder Kühlung der Sonde bewirkten Sondentemperaturverlauf durch eine Vielzahl seiner Stellen digital abzuspeichern und danach oder später auf die ihm zugrundeliegenden Werte von v bzw. D auszuwerten, also bspw. den Sondentemperaturverlauf beginnend mit $t_e$ bis zum Wiedereintritt von $T_S \approx 0$ reichend auszuwerten.

Der Schalter 20 wird durch eine Zeitschaltvorrichtung 21 geöffnet und geschlossen. Es kann bspw. in konstanten Zeitabständen oder in durch einen Zufallsgenerator bestimmten variablen Zeitabständen geschlossen und dann jeweils nach einer vorbestimmten Zeitdauer wieder geöffnet werden. Im Falle des Einsatzes einer solchen Einrichtung bei Wärmemengenzählungen kann ein solcher Zufallsgenerator evtl. Manipulationen der Wärmemengenzählung sicher verhindern.

Der Zeitpunkt des Schließens des Schalters 20 ist in den Diagrammen nach den Fig. 3 bis 6 jeweils mit $t_e$ bezeichnet. $t_e$ kann für den einzelnen Fühlvorgang zu Null angesetzt werden.

Die Zeitdauer zwischen zwei Fühlvorgängen kann dabei im allgemeinen zweckmäßig zumindest so groß getroffen werden, daß beim jedesmaligen Schließen des Schalters 20 die Sonde 15 die Temperatur des Fluids durchgehend einschließlich ihres Temperaturfühlers 17 und ihrer Wärmequelle 16 angenommen hat. Es ist jedoch auch möglich, die Messung von einem anderen Temperaturniveau der Sonde 15 aus vorzunehmen und die Temperaturdifferenz zur Fluidtemperatur evtl. auch als Parameter der Sondentemperaturverläufe des betreffenden Kennlinienfeldes mit einzuführen. Da jedoch die Wärmekapazität der Sonde 15 sehr klein gehalten werden kann, kann sie entsprechend rasch nach jedem einzelnen Fühlvorgang des Durchflusses bzw. der Strömungsgeschwindigkeit des Fluids sich wieder auf die Fluidtemperatur abkühlen, und es ist deshalb im allgemeinen ausreichend und zweckmäßig, den Schalter 20 zur Durchführung eines Fühlvorganges mittels der Zeitschaltvorrichtung 21 immer erst dann einzuschalten, wenn die Temperatur der Sonde 15 der vom Temperaturfühler 24 gefühlten Fluidtemperatur entspricht.

Die Zeitschaltvorrichtung 21 kann vorzugsweise so ausgebildet sein, daß sie den Schalter 20 jeweils für eine vorbestimmte, konstante, ggfs. einstellbare Zeitdauer schließt. Diese Zeitdauer kann bei geringer Baugröße der Sonde 15 klein sein, vorzugsweise weniger als eine Minute, vorzugsweise in der Größenordnung von Sekunden oder oft sogar unter einer Sekunde liegen.

Bei Einsatz der Einrichtung nach der Fig. 1 für Wärmemengenzählungen bei Heizungsanlagen kann der zeitliche Abstand aufeinanderfolgender Fühlvorgänge bspw. 10 bis 30 Minuten betragen oder auch noch länger oder kürzer sein. Die Zeitabstände können aber brauchen nicht konstant zu sein. Bspw. können sie auch vom Auftreten von Änderungen der Strömungsgeschwindigkeit bzw. des Durchflusses abhängig gemacht werden, wodurch noch weitere erhebliche Verringerung der Wärme- oder Kühlungsenergie erreicht werden kann, die zum Betrieb der Wärme- bzw. Kältequelle 16 der Sonde 15 erforderlich ist.

Im Gefolge jedes Schließens des Schalters 20 erzeugt die Zeitschaltvorrichtung zum Zeitpunkt $t_a$, also nach der vorbestimmten Zeitdauer $t_a - t_e$ (Fig. 3, 4) ein den Schalter 20 wieder?ndes Schaltsignal. Im weiteren wird das Diagramm nach Fig. 3 noch näher erläutert. Die Zeitschaltvorrichtung 21 erzeugt für einen Fühlvorgang nach einer vorbestimmten, ab dem Zeitpunkt $t_e$ abgemessenen Zeitdauer, bspw. zum Zeitpunkt $t_b$, ein Ausgangssignal, das über die Leitung 40 einem Temperaturdifferenzglied 41 aufgedrückt wird, und bei Auftreten dieses Ausgangssignales wird dann die in diesem Temperaturdifferenzglied 41 momentan ermittelte Temperaturdifferenz zwischen der vom Fühler 17 gefühlten Temperatur $T_a$ und der vom Fühler 24 gefühlten Fluidtemperatur $T_f$, also die Differenz $T_s = T_a - T_f$, in einen Speicher 41' eingelesen und hier bis auf weiteres gespeichert. Dabei wird vorausgesetzt, daß die Zeitdauer $t_b - t_e$ so kurz ist, daß sich die Fluidtemperatur nicht oder nur so wenig geändert hat, daß der hierdurch mögliche Meßfehler in Kauf genommen werden kann. Falls nicht, könnte bspw. der betreffende Fühlvorgang für ungültig erklärt und wiederholt werden. Bei Wärmemengenzählern können sich solche Meßfehler infolge der vielen Messungen auch gegeneinander aufheben. Die im Speicher 41' nunmehr gespeicherte Temperaturdifferenz wird sofort anschließend ebenfalls gesteuert von der Zeitschaltvorrichtung 21, in einen Rechner 42 eingegeben. Ferner ist ein Speicher 43 für das Kennlinienfeld, bspw. gemäß Fig. 3, vorhanden, und der Rechner 42 berechnet dann im Gefolge jeder Eingabe einer Temperaturdifferenz $T_a - T_f$ mit Hilfe der Speicherdaten des Speichers 43 die momentane Strömungsgeschwindigkeit v bzw. den Durchfluß D des Fluids und liest diesen berechneten Wert in einen Speicher 43' ein, wo er für weitere Verwertung gespeichert oder durch ein mit dem Speicher verbundenes Anzeigegerät 44 angezeigt werden kann. Der Durchfluß kann bspw. als Massenstrom oder Volumenstrom des Fluids zahlenmäßig angezeigt werden. Desgleichen kann die Strömungsgeschwindigkeit zahlenmäßig angezeigt werden. Oder der Speicher 43' kann an ein die gespeicherte Strömungsgeschwindigkeit bzw. den gespeicherten Durchfluß weiterverarbeitendes Gerät angeschlossen sein, bspw. an das in Fig. 7 dargestellte Multiplikationsglied 45 eines Wärmemengenzählers. Sobald der gespeicherte Wert nicht mehr benötigt wird, kann er gelöscht werden. Wie man aus dem Diagramm nach Fig. 3 gut ersehen kann, sind die Abstände zwischen den dargestellten Kurven 30, 31, 32 an ihren Maxima am größten. Die Maxima fallen ungefähr mit dem Öffnungszeitpunkt $t_a$ des Schalters 20 zusammen. Deshalb beginnen die Kurven etwa ab dem Zeitpunkt $t_a$ wieder abzufallen, nachdem sie vorher, beginnend mit dem Zeitpunkt $t_e$ und bei dem der Fluidtemperatur $T_f$ entsprechenden Wert für $T_a$ mit Schließen des Schalters 20 durch Einschalten der Wärmequelle 16 mit konstanter Heizleistung in Abhängigkeit von v bzw. D unterschiedlich rasch anstiegen, da die Sonde 15 vom Fluid umso stärker gekühlt wird, je höher die Werte v und D des Fluids sind. Man kann also die der Sondentemperatur $T_s$ entsprechende Temperaturdifferenz $T_a - T_f$, die bei jedem Fühlvorgang eine vorbestimmte Zeitdauer nach dem Schließen des Schalters 20 vorliegt und im Speicher 41' bis zu ihrem Auslesen in den Rechner 42 gespeichert wird, zweckmäßig stets zum Zeitpunkt $t_a$ ermitteln, also nach einer Zeitdauer $t_a - t_e$ nach Schließen des Schalters 20. Oder man kann, falls erwünscht, auch einen anderen Zeitpunkt zur Ermittlung der jeweiligen Temperaturdifferenz $T_a - T_f$ wählen, bspw. den in Fig. 3 eingezeichneten Zeitpunkt $t_b$, der noch zeitlich vor den Maxima der Kurven 30-32 liegt, oder auch zu einem erst zeitlich nach Wiederöffnen des Schalters 20 liegenden Zeitpunkt, bspw. zum Zeitpunkt $t_c$, der also auf den absteigenden Ästen der Kurven 30-32 liegt. Die Zeitpunkte $t_c$, $t_a$, $t_b$ ergeben also jeweils vom Zeitpunkt $t_e = 0$ aus gerechnete Zeitspannen.

Zum Zeitpunkt $t_a$ weisen die drei Kurven 30-32 die Sondentemperaturen $T_{11}$, $T_{12}$ bzw. $T_{13}$ auf. Wenn also z. B. zum Zeitpunkt $t_a$ der Fühler 17 die Sondentemperatur $T_{12}$ fühlt, dann ermittelt der Rechner aus diesem Kennlinienfeld, daß v bzw. D den betreffenden Wert des Parameters v bzw. D der Kurve 31 hat. Wenn man für die Ermittlung der im Glied 41′ kurzzeitig zu speichernden Temperaturdifferenz den Zeitpunkt $t_b$ zugrunde legt, dann ergeben die zu diesem Zeitpunkt gemessenen Sondentemperaturen $T_{21}$ bzw. $T_{22}$ bzw. $T_{23}$ als v bzw. D die betreffenden Parameter der Kurven 30-32 ebenfalls. Wenn bspw. angenommen wird, daß der Parameter v für die Kurve 30 gleich 1 m/sec, für die Kurve 31 gleich 2 m/sec und für die Kurve 32 gleich 3 m/sec beträgt, dann beträgt zum Zeitpunkt $t_b$ bei der gemessenen Temperatur $T_{21}$ die Strömungsgeschwindigkeit 1 m/sec, bei $T_{22}$ gleich 2 m/sec und bei $T_{23}$ gleich 3 m/sec. Dieselben Werte für v und D ergeben sich aus diesen Kurven 30-32 auch zum Zeitpunkt $t_c$, wenn bei ihm die gefühlten Sondentemperaturen $T_{31}$ bzw. $T_{32}$ bzw. $T_{33}$ betragen. Man kann natürlich auch andere geeignete Zeitpunkte $t_x$ für das Messen der Sondentemperaturen zwecks Eingabe in das Temperaturdifferenzglied 41 vorsehen. Desgleichen kann man bei dieser Auswertung des jeweiligen Sondentemperaturverlaufes vorsehen, die Temperaturfühler 17, 24 immer nur zum betreffenden Zeitpunkt, wie z. E. $t_a$, für kurze Zeit zur Durchführung der Temperaturmessung einzuschalten.

Die Kurven 30-32 des Diagramms nach Fig. 3 sind auch in dem Diagramm nach Fig. 4 eingezeichnet und dieses Diagramm zeigt eine andere Auswertemöglichkeit dieser Sondentemperaturverläufe 30-32 und der sonstigen, nicht eingezeichneten Sondentemperaturverläufe. Der Nullpunkt des Koordinatensystems nach Fig. 4 ist, wie im Falle der Fig. 3, wieder durch die Fluidtemperatur ratur $T_f$ und den Einschaltzeitpunkt $t_e$ des Schalters 20 bestimmt. $t_e$ kann dabei jeweils zweckmäßig als 0 angesetzt werden. Und zwar ist in diesem Diagramm nach Fig. 4 vorgesehen, daß beim Erreichen der Sondentemperatur $T_1$ entweder vor dem Zeitpunkt $t_a$ oder nach dem Zeitpunkt $t_a$ die jeweils seit dem Zeitpunkt $t_e$ verstrichene Zeitdauer gemessen wird. Beträgt diese Zeitdauer $t_1$ bzw. $t_4$, dann liegt als Strömungsgeschwindigkeit v bzw. Durchfluß D des Fluids der betreffende Parameter v bzw. D der Kurve 30 vor. Für die Zeitpunkte $t_2$ und $t_5$ entspricht v bzw. D dem betreffenden Parameter der Kurve 31 und für die Zeitpunkte $t_3$ bzw. $t_6$ für v und D die Parameter der Kurve 32. In obigem Zahlenbeispiel wäre v also wieder 1 m/sec für $t_1$ und $t_4$; 2 m/sec für $t_2$ und $t_5$ und 3 m/sec für $t_3$ und $t_6$.

Für die Zeitmessung kann direkte Messung der Zeit oder die Messung einer von ihr abhängigen Größe vorgesehen werden.

Man kann dabei auch vorsehen, wenn die Zeitmessung vor $t_a$ liegt, den Schalter 20 bereits wieder zu öffnen, sobald die betreffende Temperatur $T_1$ erreicht ist, so daß dann die strichpunktiert angedeuteten, absteigenden Sondentemperaturäste entstehen, und man könnte dann auch vorsehen, bei einer vorbestimmten niedrigeren Sondentemperatur, bspw. der eingezeichneten Temperatur $T_2$, die bis zum Erreichen dieser Sondentemperatur $T_2$ seit $t_e$ verstrichene Zeitdauer zu messen und aus dieser Zeitdauer auf die momentane Strömungsgeschwindigkeit bzw. den momentanen Durchfluß D zu schließen als Parameter der betreffenden Kurven.

Man erkennt ferner aus den Diagrammen nach den Fig. 3 und 4, daß die Temperaturgradienten der Kurven 30-32 innerhalb eines großen Zeitbereiches für einen vorbestimmten Zeitpunkt nach $t_e$, z. B. $t_d$ oder für eine vorbestimmte Sondentemperatur unterschiedlich groß sind, so daß man also auch aus diesen Temperaturgradienten $dT_s/dt_x$ bzw. $\Delta T_s/\Delta t_x$ (ein solches $\Delta T_s/\Delta t_x$ ist für die Kurve 30 an einer Stelle in Fig. 3 eingezeichnet) den jeweiligen Sondentemperaturverlauf erkennt und damit den momentanen Wert v bzw. D des Fluids. Wenn man mit einer einzigen vorbestimmten Sondentemperatur, bspw. der Sondentemperatur $T_1$ nach dem Diagramm nach Fig. 4 arbeiten will, dann kann man für die Ermittlung von v bzw. D eine einzige Kennlinie 33 vorsehen, wie es das Diagramm nach Fig. 5 zeigt. in diesem Diagramm ist die Abszisse weiterhin $t_x$, jedoch die Ordinate v bzw. D und die dargestellte Kurve 33 ergibt den Zusammenhang zwischen $t_x$ und v bzw. D, wie man ohne weiteres ersieht, wobei die Zeitpunkte $t_1$, $t_2$ und $t_3$ des Diagramms nach Fig. 4 eingezeichnet sind. Man braucht dann im Speicher 43 (Fig. 1) nur diese Kennlinie 33 zu speichern.

Das Diagramm nach Fig. 6 unterscheidet sich von denen nach den Fig. 3 und 4 dadurch, daß die dargestellten Sondentemperaturverläufe 30′, 31′ und 32′ nicht durch Beheizen der Sonde mit relativ geringer Heizleistung bis ungefähr zu den Maxima der dargestellten Kurven erfolgte, sondern daß die Wärmequelle 16 in die Sonde nur einen sehr kurzzeitigen Wärmestoß einer vorbestimmten Wärmemenge schickte. Bspw. kann dies mit konstanter Heizleistung erfolgt sein, wobei zum Zeitpunkt $t_e$ der Schalter 20 geschlossen und schon wieder zum sehr frühen Zeitpunkt $t_a$ bspw. nach einer Sekunde wieder geöffnet wurde. Die zugeführte Heizleistung ist dabei hoch. Jedoch wirkt sie sich an dem Fühler 17 erst zeitlich verzögert aus. Diese Heizleistung geht ebenfalls als Wärme z. T. in das Fluid und z. T.

zum Fühler 17, wobei wiederum die Kurven 30'-32' um so rascher ansteigen, je niedriger die Strömungsgeschwindigkeit bzw. die Durchflußmenge wegen der dann schlechteren Kühlung der Sonde 15 durch das Fluid ist. In diesem Ausführungsbeispiel nach Fig. 6 liegt bei den Maxima $T_4$, $T_5$ und $T_6$ starke Temperaturspreizung vor und diese Maxima brauchen nicht genau zum gleichen Zeitpunkt aufzutreten. Jedoch ist das jeweilige Maximum abhängig von v bzw. D, so daß bei dem Diagramm nach Fig. 6 es genügt, nur die Temperaturmaxima der Kurven 30'-32' und evtl. weiterer, nicht dargestellter derartiger Kurven zu ermitteln, und aus dem jeweiligen Maximalwert kann dann auf die momentane Strömungsgeschwindigkeit v bzw. den momentanen Durchfluß D ebenfalls mit guter Genauigkeit geschlossen werden. Bspw. kann wieder $T_4$ einer Strömungsgeschwindigkeit des Fluids von 1 m/sec, $T_5$ von 2 m/sec und $T_6$ von 3 m/sec entsprechen.

Erfindungsgemäße Fühleinrichtungen können vielfältige Anwendungen haben. Ein bevorzugtes Anwendungsgebiet sind Wärmemengenzähler. Ein Ausführungsbeispiel eines Wärmemengenzählers ist in Fig. 7 dargestellt.

Es ist eine Heizungsanlage eines Gebäudes vorhanden, von der nur die Vorlaufleitung 50 und die Rücklaufleitung 51 und ein vom Heizungswasser durchströmter Wärmetauscher 52 dargestellt sind. Die Vorlauftemperatur des Heizungswassers wird mittels eines Temperaturfühlers 24, der dem Temperaturfühler 24 nach Fig. 1 entsprechen kann, gefühlt. Die Rücklauftemperatur des Heizungswassers wird mittels eines anderen Fühlers 53 gefühlt und die Differenz zwischen Vorlauftemperatur und Rücklauftemperatur in einem Differenzglied 54 gebildet. Der Durchfluß, und zwar hier der Massenstrom des Heizungswassers, wird mittels einer Einrichtung nach Fig. 1 gemessen, von der die Sonde 15 angedeutet ist. Der Block 55 umfaßt die Komponenten 20, 21, 23, 41, 41', 42, 43, 43' der Fig. 1. Der Ausgang des Speichers 43' bildet den Ausgang dieses Blockes 55 und wird in ein Multiplikationsglied 45 eingegeben, das die im Differenzglied 54 gebildete Temperaturdifferenz zwischen der Vorlauftemperatur und der Rücklauftemperatur mit dem vom Speicher 43' ausgegebenen momentanen Durchfluß multipliziert. Der Multiplikationswert entspricht der momentanen Wärmeabgabe der Heizungsanlage in Fig. 7, und es wird dann angenommen, daß der Durchfluß D bis zu seiner nächsten Messung für die Durchführung der Multiplikation im Glied 45 konstant bleibt. Es wird dann in vorbestimmten konstanten Zeitabständen oder durch einen Zufallsgenerator oder auf sonstige Weise gesteuerten Zeitabständen jeweils der Durchfluß D mittels der Einrichtung 15, 55 neu gemessen, berechnet und gespeichert und in das Muliplikationsglied 45 eingegeben. Der Ausgang des Multiplikationsgliedes 45 wird in einen Integrator 56 eingegeben, der ihn zeitlich integriert.

Die hierdurch im Integrator 56 gezählte Wärmemenge wird mittels eines Zählwerks 57 angezeigt, wo sie also abgelesen werden kann.

In Fig. 8 ist noch eine andere Anordnung einer Sonde 15 gemäß einem weiteren Ausführungsbeispiel der Erfindung dargestellt. In Fig. 8 ist die Sonde 15 in die Wandung eines das betreffende Fluid leitenden Rohres 10 eingesetzt und allseitig, mit Ausnahme ihrer vom Fluid bespülten Längsseite 58, durch eine Wärmeisolation 57' gut wärmeisoliert, so daß die in sie durch die in ihrem Inneren befindliche Wärmequelle einleitbare Wärme jeweils praktisch vollständig in das Fluid abfließt.

Zu dem Diagramm nach Fig. 4 sei in bezug auf die Einrichtung nach Fig. 1 noch erläutert, daß bei der Auswertung des Kennlinienfeldes gemäß Fig. 4 die bei einem Fühlvorgang zu messende Zeitdauer, wie z. B. $t_1 - t_8$, die bis zum jeweiligen Erreichen der Sondentemperatur $T_1$ bzw. $T_2$ oder einer sonstigen vorbestimmten Sondentemperatur vergeht, durch ein in Fig. 1 strichpunktiert eingezeichnetes gesondertes Zeitmeßglied 28 erfolgen kann, das durch die Zeitschaltvorrichtung 21 gleichzeitig mit dem Schalter 20 eingeschaltet und vom Temperaturdifferenzglied 41 bei Erreichen der betreffenden Sondentemperatur, wie z. B. $T_1$, wieder ausgeschaltet wird und dann die von ihm jeweils abgemessene Zeitspanne in den Rechner 42 eingibt und dann für die nächste Zeitmessung auf Null zurückgestellt wird.

Der Rechner 42 bildet zusammen mit dem Kennlinienfeldgeber 43 einen Auswerter der in ihn eingegebenen Daten.

Die Einrichtungen nach diesen Ausführungsbeispielen lassen sich für recht große Strömungsgeschwindigkeitsbereiche des Fluids insbesondere von Flüssigkeiten, einsetzen. So können sie bei den in Heizungsvorlaufleitungen oder -rücklaufleitungen von Heizungen üblichen Strömungsgeschwindigkeiten des Heizungswassers ohne weiteres eingesetzt werden. Diese Strömungsgeschwindigkeiten betragen hier im allgemeinen etwa 0,1 bis 2 m/sec. Doch lassen sich mit erfindungsgemäßen Einrichtungen auch noch kleinere oder noch größere Strömungsgeschwindigkeiten messen, sofern sie noch auswertungsfähige Kennlinienfelder oder Kennlinien ergeben.

In Fig. 5 sind die durch die gemessenen Zeiten $t_1$, $t_2$, $t_3$ ermittelten Strömungsgeschwindigkeiten v bzw. Durchflüsse des Fluids mit $v_1$, $v_2$, $v_3$ bzw. $D_1$, $D_2$, $D_3$ bezeichnet.

Kennlinien ähnlich der nach Fig. 5 kann man auch aus dem Diagramm nach Fig. 3 ableiten. Wenn bspw. die Sondentemperatur $T_s$ stets zum Zeitpunkt $t_b$ ermittelt wird, dann kann man, wie es Fig. 10 an einem Beispiel zeigt, eine Kennlinie 33' von v bzw. D als Funktion von $T_s$ in ein Diagramm eintragen, dessen Abszisse $T_s$ und dessen Ordinate v bzw. D ist, wobei $t_b$ = konst. und $t_e$ = 0 gesetzt ist. Auch für andere Zeitpunkte, wie z. B. $t_a$ oder $t_c$ können natürlich solche Kennlinien aufgestellt werden. Wenn bei der Einrichtung nach Fig. 1 bei der Auswertung nur von einer einzigen Kennlinie, wie bspw. 33 oder 33' der Fig. 5 bzw. 10, Gebrauch gemacht wird, genügt es, diese im Speicher 43 zu speichern.

Da die Erfindung Strömungsgeschwindigkeiten messen läßt, kann sie auch dazu verwendet werden, die Fahrgeschwindigkeit von Wasserfahrzeugen durch Messung ihrer Relativgeschwindigkeit zum Wasser mittels an ihnen angeordneten erfindungsgemäßen Einrichtungen gemäß einer Weiterbildung der Erfindung zu ermitteln.

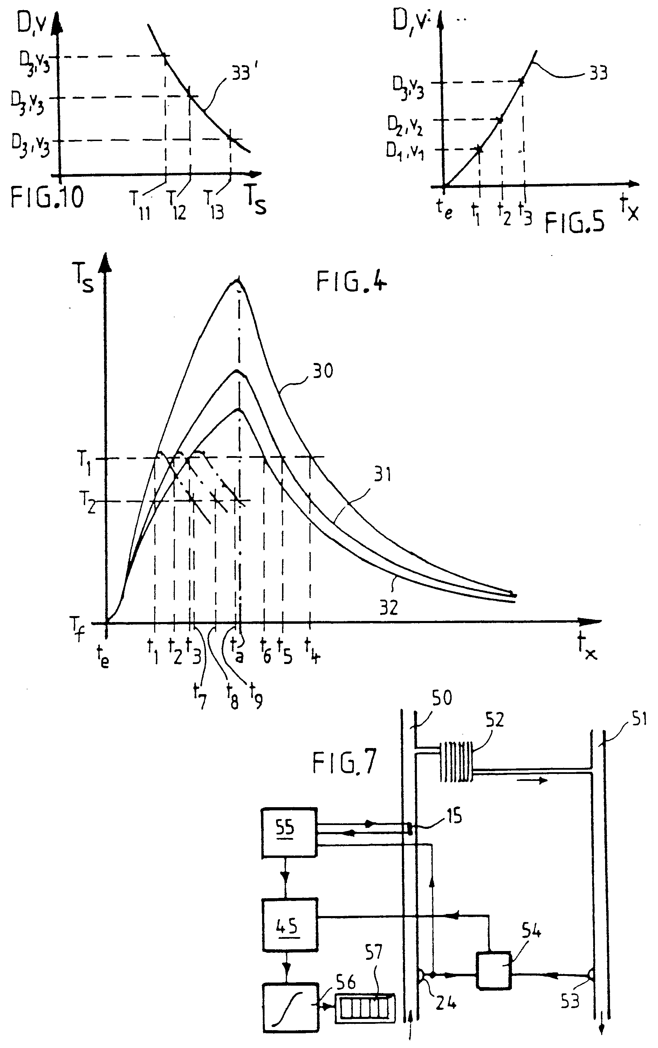

Die in Fig. 9 längsgeschnitten dargestellte Sonde 15 weist einen massiven blockförmigen Körper 13 aus einem Kunststoff schlechter Wärmeleitfähigkeit auf, der ein elektrischer Isolator ist und der an einer Strebe 14 befestigt ist, die ihn im Rohr 10 trägt, von dem nur ein Wandausschnitt dargestellt ist. In diesen Körper 13 ist eine Metallgabel als metallischer Wärmeleiter 39 wie dargestellt eingebettet. Dem einen Gabelarm 73 dieser Metallgabel 39 liegt in geringem Abstand außenseitig ein als Wärmequelle 16 dienender elektrischer Heizwiderstand und dem anderen Gabelarm 73' in geringem Abstand außenseitig ein Temperaturfühler 17 zum Fühlen der Sondentemperatur gegenüber. Der Heizwiderstand 16 wie auch dieser Temperaturfühler 17 sind in den Körper 13 eingebettet. Die Metallgabel 39 ist fast ganz in den Körper 13 eingebettet. Sie bildet jedoch mit dem freien Ende ihres Gabelfußes 71 einen metallischen stufenförmigen Absatz 72 der sich in Strömungsrichtung des Fluids erstreckenden unteren Wand der Sonde 15, welcher stufenförmige Absatz 72 der Strömungsrichtung (Pfeil A) des Fluids entgegengerichtet ist, so daß die Strömung das Metall dieses Absatzes 72 direkt beaufschlagt. Hierdurch wird die Kühlung der Gabel, solange ihre Temperatur durch das Beheizen mittels des Heizwiderstandes 16 über der Fluidtemperatur liegt, von der Strömungsgeschwindigkeit bzw. dem Durchfluß des Fluids im Rohr besonders stark abhängig. Und zwar wird, wie auch in den anderen Ausführungsbeispielen, der Heizwiderstand 16 ab Beginn eines Fühlvorganges der Strömungsgeschwindigkeit bzw. des Durchflusses des Fluids so beheizt, daß er in die Sonde 15 in vorbestimmter Dosierung und/oder mit vorbestimmter Heizleistung Wärme liefert, die wegen des geringen Abstandes des Heizwiderstandes 16 vom gegenüberliegenden Gabelarm 73 praktisch vollständig in diesen Gabelarm 73 und durch diesen Gabelarm 73 hindurch unter Aufspaltung in zwei Strömungswege sowohl in den anderen Gabelarm 73' als auch zum an dem Absatz 72 freiliegenden Bereich oder nur durch eine dünne Schutzschicht gegen Verschmutzung geschützten Bereich des Fußes der Metallgabel 39 gelangt, welcher Bereich von dem Fluid direkt angeströmt wird. Der Temperaturfühler 17 fühlt die Temperatur des Körpers 13 in geringem Abstand gegenüber dem Gabelarm 73', wo sie stark abhängig ist von v bzw. D. Die jeweils erzeugte Wärme fließt praktisch vollständig in das Fluid ab.

Diese Sonde 15 ergibt besonders starken Einfluß der Parameter v bzw. D auf den Sondentemperaturverlauf innerhalb großer Geschwindigkeitsbereiche des Fluids. Es ist auch denkbar, in manchen Fällen den Temperaturfühler 17 und/oder den Heizwiderstand 16 unmittelbar an dem betreffenden Gabelarm 73' bzw. 73 anliegen zu lassen.

Auch kann die Sonde 15 ggfs. mehrere Temperaturfühler aufweisen, bspw. in Fig. 2 noch einen zweiten, strichpunktiert dargestellten Temperaturfühler 17, wobei dann die Temperatur $T_a$ einem Mittelwert der von ihnen gefühlten Temperaturen entspricht.

Anstatt, wie anhand der Fig. 3 bis 6 an Ausführungsbeispielen beschrieben, aus einer einzelnen, punktförmigen Stelle des jeweiligen Sondentemperaturverlaufes diesen jeweiligen Sondentemperaturverlauf zu identifizieren und hierdurch dessen Parameter v bzw. D und damit die momentane Strömungsgeschwindigkeit bzw. den momentanen Durchfluß des Fluids während des betreffenden einzelnen Fühlvorganges zu ermitteln, kann hierzu auch mindestens ein mehr oder weniger großer Bereich des jeweiligen Sondentemperaturverlaufes oder der gesamte jeweilige Sondentemperaturverlauf herangezogen werden. So erfaßt der Temperaturgradient $\Delta T/\Delta t$ in Fig. 3 keine punktförmige Stelle der Kurve 30, sondern einen relativ kurzen Bereich dieses zeitlichen Sondentemperaturverlaufes 30 zu dessen Identifikation und damit zum Erkennen der momentanen Parameter v bzw. D und damit zum Ermitteln dieser Werte v bzw. D während des betreffenden Fühlvorganges. Oder es kann aus mehreren punktförmigen Stellen und/oder Bereichen des jeweiligen Sondentemperaturverlaufes oder seiner gesamten Kurve auf den momentanen Wert von v bzw. D geschlossen werden, bspw. durch mehrfache Ermittlung von v bzw. D und dessen Mittelwertbildung. Der oder die mindestens eine Stelle und/oder mindestens eine Bereich eines Sondentemperaturverlaufes, aus dem in solchen Fällen dieser Sondentemperaturverlauf zur Ermittlung seines Parameters v bzw. D identifiziert wird, können auf dem ansteigenden und/oder absteigenden Ast des Sondentemperaturverlaufes liegen. Es ist auch möglich, auch auf andere Weise einen oder mehrere Bereiche des jeweiligen zeitlichen Sondentemperaturverlaufes zur Identifikation seines Parameters v bzw. D und damit zum Ermitteln des während des betreffenden Fühlvorganges vorliegenden Wertes v bzw. D einzusetzen. So kann bspw. mindestens ein mehr oder weniger großer Abschnitt des jeweiligen Sondentemperaturverlaufes bspw. im Diagramm nach Fig. 3 ein von $t_e$ bis $t_a$ oder von $t_b$ bis $t_c$ oder von $t_a$ bis $t_c$ reichender oder ein anderer geeigneter Abschnitt auf seiner ganzen Länge oder durch mehrere oder viele Punkte seines betreffenden Bereiches zur Identifikation des betreffenden Sondentemperaturverlaufes und damit zum Ermitteln von v bzw. D herangezogen werden. Zu diesem Zweck kann man bspw. im Kennlinienspeicher 43 (Fig. 1) die zur Identifikation vorgesehenen Bereiche einer Vielzahl oder Mehrzahl von Sondentemperaturverläufen speichern und den jeweils gefühlten Verlauf des betreffenden Abschnittes des Sondentemperaturverlaufs mit den gespeicherten Abschnitten zur Identifizierung des momentanen Sondentemperaturverlaufes und damit von dessen Parameter v

11

bzw. D vergleichen.

Man kann oft auch auf den Temperaturfühler 24 (Fig. 1) für die Fluidtemperatur $T_f$ verzichten, insbesondere dann, wenn man die Sondentemperatur $T_s$ auf die zu Anfang des jeweiligen Fühlvorganges vorliegende Sondentemperatur $T_{ao}$ bezieht. In den dargestellten Ausführungsbeispielen wäre dann $T_{ao} = T_f$ zum Zeitpunkt te. Dies kann z. B. oft dann zweckmäßig vorgesehen werden, wenn die Fühlvorgänge stets in so großen Zeitabständen erfolgen, daß bei Beginn eines jeden Fühlvorganges stets $T_{ao} = T_f$ ist. Man kann dann die vom Fühler 17 zu Beginn eines Fühlvorganges gefühlte Temperatur $T_{ao}$ der Fluidtemperatur $T_f$ gleichsetzen — in welchem Fall der Temperaturfühler 24 oft auch ganz weggelassen werden kann — und diese Anfangstemperatur $T_{ao}$ bspw. in einen in Fig. 1 strichzweipunktiert eingezeichneten Speicher 49, dessen Inhalt vorher gelöscht wurde, zu Beginn eines jeden Fühlvorganges eingeben und mit diesem gespeicherten Wert $T_{ao}$ die während dieses Fühlvorganges später im Speicher 41' gespeicherte Temperaturdifferenz $T_s = T_a — T_{ao}$ bilden. Solches kann man oft zweckmäßig auch dann vorsehen, wenn $T_{ao}$ von der Fluidtemperatur abweicht, vorzugsweise dann, wenn diese Abweichung konstant ist oder der auf $T_{ao}$ bezogene Sondentemperaturverlauf nicht störend abhängig ist von $T_{ao} — T_f$.

In allen Ausführungsbeispielen ist die Sondentemperatur $T_s$ auf die jeweilige Fluidtemperatur $T_f$ bzw. auf $T_{ao}$ bezogen. Falls $T_f$ als Bezugstemperatur sich während des einzelnen Fühlvorganges ändert, liegt dann also während des betreffenden Fühlvorganges keine konstante Bezugstemperatur vor. Dies kann sich vorteilhaft auf die Meßgenauigkeit auswirken. Es ist in vielen Fällen auch möglich und zweckmäßig, die Sondentemperatur $T_s$ bei dem einzelnen Fühlvorgang auf eine andere konstante oder nicht konstante Bezugstemperatur zu beziehen, bspw. auf die zu Beginn der Beheizung oder Kühlung vorliegende Fluidtemperatur oder $T_{ao}$. Oder es kann in manchen Fällen die Bezugstemperatur der Gefrierpunkt von Wasser sein. Eine nicht konstante Bezugstemperatur kann insbesondere auch dazu vorgesehen sein, um während des betreffenden Fühlvorganges auftretende Störgrößen, z. B. sich sehr rasch ändernde Fluidtemperatur, in ihrer Auswirkung auf die Meßgenauigkeit ganz oder zum Teil zu kompensieren.

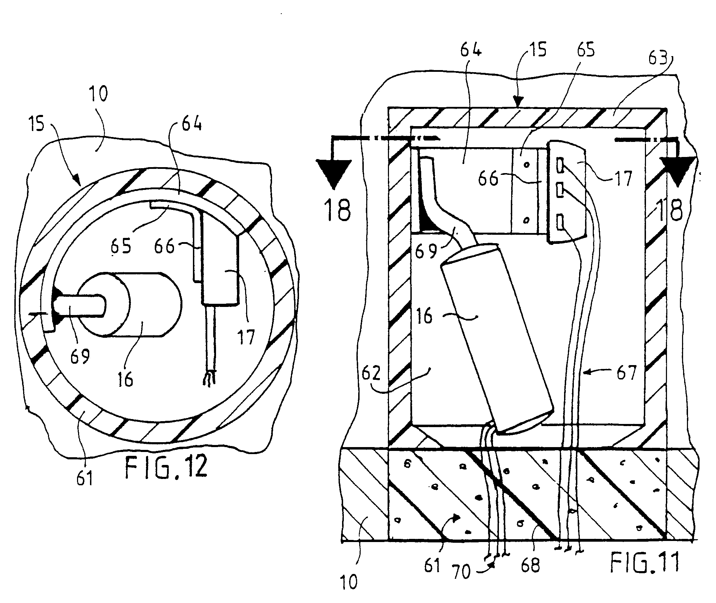

Die Sonde 15 nach Fig. 11 und 12 weist einen kreiszylindrischen Hohlkörper 61 aus schwach wärmeleitendem Kunststoff auf, der in die Wandung eines Leitungsrohres 10 eingesetzt ist und in das dieses Leitungsrohr durchströmende Fluid, dessen Strömungsgeschwindigkeit v bzw. Durchfluß D mittels dieser Sonde 15 zu fühlen ist, hineinragt, so daß dieses Fluid die Sonde 15 anströmt.

Der Hohlkörper 61 weist einen sich im wesentlichen über die Höhe seines in den Innenraum des Rohres 10 hineinragenden Bereiches erstreckenden, gegen das Fluid, sowie durch einen wärmeisolierenden Boden 68 auch nach außen völlig abgeschlossenen Innenraum 62 auf, an dessen Innenumfangswand nahe der im Fluid befindlichen Decke 63 dieser Sonde 15 ein Bügel 64 aus gut wärmeleitendem Metall, vorzugsweise aus Kupfer formschlüssig fest angeordnet ist, der sich über etwas mehr als 90° dieser kreiszylindrischen Innenumfangswand erstreckt, so daß er in gutem wärmeleitenden Kontakt mit der relativ dünnen, vom Fluid aussenseitig benetzten Umfangswandung des Hohlkörpers 61 steht.

An dem einen Längsende dieses kreisbogenförmig gekrümmten Bügels 64 ist ein vorzugsweise ebenfalls aus Kupfer oder einem anderen gut wärmeleitendem Metall bestehender, streifenförmiger Träger 65 in gutem Kontakt mit dem Bügel 64 formschlüssig fest angeordnet, dessen vom Bügel 64 abstehender flacher Schenkel 66 sich im wesentlichen über die Breite und Höhe einer ebenen Seitenfläche eines die Sondentemperatur fühlenden Temperaturfühlers 17 erstreckt, an welcher Seitenfläche dieser Schenkel 66 formschlüssig in gut wärmeleitendem Kontakt anliegt. Dieser Temperaturfühler 17 ist in diesem Ausführungsbeispiel als ein mindestens einen temperaturempfindlichen Transistor oder mindestens ein anderes temperaturempfindliches Element aufweisender integrierter Schaltkreis (IC) ausgebildet, dessen Anschlußdrähte 67 durch den Boden 68 des Hohlkörpers 61 aus dessen Innenraum 62 nach außen herausgeführt sind.

Am anderen Längsendbereich des Bügels 64 ist ein drahtförmiger, steifer Träger 69 aus ebenfalls die Wärme gut leitendem Metall wie dargestellt angelötet, an dessen vom Bügel 64 im Abstand befindlichen freien Ende ein als Wärmequelle 16 dieser Sonde 15 dienender Transistor in gut wärmeleitendem Kontakt befestigt ist, dessen Anschlußdrähte 70 ebenfalls durch den Boden 68 nach außen aus dem Hohlraum 62 herausgeführt sind. Auch diese Sonde liefert hervorragende Sondentemperaturverläufe, die sich über große Bereiche von v und D auf die ihnen jeweils zugeordneten Werte von v und D leicht und genau auswerten lassen. Es fließt bei jedem Fühlvorgang praktisch die gesamte Wärme in das Fluid.

Damit kein unkontrollierter Wärmefluß in die Sonde hinein und aus ihr heraus die Meßgenauigkeit stören oder verringern kann, ist es zweckmäßig, wenn die von der mindestens einen Wärmequelle bzw. Kältequelle in die Sonde eingeleitete bzw. ihr entzogene Wärme jeweils vollständig oder im wesentlichen in das Fluid einströmt, bzw. aus dem Fluid in die Sonde einströmt. Dies kann durch geeignete Wärmeisolierung der Sonde oder ihre Anordnung innerhalb des Fluids unschwer erreicht werden. Die elektrischen Leitungsdrähte für den Temperaturfühler und die Wärme- oder Kältequelle können unter Umständen einen kleinen Teil der von der Wärmequelle oder Kältequelle erzeugten bzw. abgeführten Wärme am Fluid vorbei nach außen oder von außen in die Sonde einleiten, doch kann dieser stets problemlos sehr klein gehalten werden, und zwar ohne weiteres vernachlässigbar klein, bspw. u. a. auch dadurch, daß die Leitungsdrähte durch das Fluid hindurch geführt sind und dessen Temperatur annehmen. Auch kann in vielen Fällen ein Wärmefluß zwischen der Sonde und außen während des einzelnen Fühlvorganges in Kauf genommen werden, wenn die Außentemperatur, also bspw. die Umgebungstemperatur einer das Fluid führenden Leitung ungefähr konstant ist oder hier vorhandene Temperaturschwankungen klein gegenüber den durch die Wärmequelle bzw. Kältequelle erzeugten Sondentemperaturen sind oder hierdurch verursachte Meßfehler · in Kauf genommen werden können oder sich bei über längere Zeiträume, z. B. eine Heizperiode, andauernden Wärmemengenmessungen im Mittel ungefähr herausheben.

**Patentansprüche**

1. Verfahren zum Fühlen der Strömungsgeschwindigkeit eines Fluids, vorzugsweise einer Flüssigkeit, und/oder des Durchflusses eines Fluids durch eine Leitung oder dgl., wobei das Fühlen der Strömungsgeschwindigkeit bzw. des Durchflusses des Fluids diskontinuierlich in einzelnen, Zeit beanspruchenden Fühlvorgängen erfolgt, die vorzugsweise in vorbestimmten Zeitabständen aufeinanderfolgen, wobei der einzelne Fühlvorgang mit Hilfe einer Sonde (15) erfolgt, die von dem Fluid angeströmt wird, welche Sonde (15) in ihrem Inneren mindestens eine Wärmequelle bzw. Kältequelle (16) aufweist, die in wärmeleitender Verbindung mit dem an die Sonde angrenzenden Fluid steht, wobei ferner die Sonde (15) zur Ermittlung einer Sondentemperatur in ihrem Inneren mindestens eine Stelle aufweist, deren Temperatur mittels eines im Inneren der Sonde (15) angeordneten Temperaturfühlers (17) gefühlt werden kann, und wobei der Sonde zur Durchführung eines einzelnen Fühlvorganges der Strömungsgeschwindigkeit bzw. des Durchflusses des Fluids durch ihre mindestens eine Wärmequelle (16) bzw. Kältequelle in vorbestimmter Dosierung und/oder mit vorbestimmter Heiz- bzw. Kühlleistung Wärme zugeführt bzw. entzogen wird, derart, daß die Sondentemperatur infolge des während des betreffenden Fühlvorganges zwischen der Sonde und dem Fluid stattfindenden, von der Strömungsgeschwindigkeit bzw. dem Durchfluß des Fluids abhängigen Wärmeaustausches einen sich zeitlich ändernden Verlauf — nachfolgend instationärer Sondentemperaturverlauf genannt — erhält, der abhängig ist von der Strömungsgeschwindigkeit bzw. dem Durchfluß des Fluids, und daß aus mindestens einer Stelle und/oder mindestens einem Bereich dieses während des einzelnen Fühlvorganges stattfindenden instationären Sondentemperaturverlaufes auf die Strömungsgeschwindigkeit bzw. den Durchfluß des Fluids geschlossen wird, dadurch gekennzeichnet, daß die Sonde (15) einen von dem Fluid angeströmten Körper (13 ; 37 ; 61) geringer Wärmeleitfähigkeit aufweist, in welchem die Wärme- bzw. Kältequelle (16) und der Temperaturfühler (17) angeordnet sind, daß die Wärme- oder Kältequelle (16) die Temperatur eines zumindest im wesentlichen innerhalb des Körpers (13 ; 37 ; 61) angeordneten metallischen Wärmeleiters (39 ; 64, 65, 69) von einer Stelle innerhalb der Sonde aus ändert, die sich am metallischen Wärmeleiter (39 ; 64, 65, 69) oder in geringem Abstand von ihm befindet, welcher metallische Wärmeleiter (39 ; 64, 65, 69) unterbrechungsfrei zum Fluid führt und an seinem dem Fluid benachbarten Ende entweder vom Fluid beaufschlagt wird oder hier von ihm nur durch eine dünne Schicht getrennt ist, daß der Temperaturfühler (17) die Sondentemperatur im Abstand von der Wärme- bzw. Kältequelle am metallischen Wärmeleiter oder in geringem Abstand von ihm fühlt, und daß die durch die Wärme- bzw. Kältequelle im metallischen Wärmeleiter bewirkte Wärme- bzw. Kälteströmung so zum Fluid und zum Temperaturfühler (17) geleitet wird, daß eine ausgeprägte Spreizung der instationären Sondentemperaturverläufe (30, 31, 32 ; 30′, 31′, 32′ ; 33 ; 23′) in Abhängigkeit der Strömungsgeschwindigkeit bzw. des Durchflusses eintritt.

2. Verfahren nach Anspruch 1, dadurch gekennzeichnet, daß die Beheizung bzw. Kühlung der Sonde (15) für den einzelnen Fühlvorgang durch Zufuhr bzw. Entzug einer vorbestimmten Wärmemenge erfolgt, wobei diese Wärmemenge vorzugsweise konstant oder von mindestens einer Variablen, vorzugsweise der Fluidtemperatur, abhängig sein kann.

3. Verfahren nach Anspruch 1 oder 2, dadurch gekennzeichnet, daß die Beheizung bzw. Kühlung der Sonde (15) für den einzelnen Fühlvorgang mittels eines vorbestimmten zeitlichen Verlaufes der ihrer Beheizung bzw. Kühlung dienenden Heizleistung bzw. Kühlleistung erfolgt, vorzugsweise mit konstanter Heiz- oder Kühlleistung.

4. Verfahren nach einem der vorhergehenden Ansprüche, dadurch gekennzeichnet, daß die Beheizung bzw. Kühlung der Sonde (15) für den einzelnen Fühlvorgang eine vorbestimmte Zeitdauer und/oder impulsartig durchgeführt wird und/oder die der Erzeugung eines instationären Sondentemperaturverlaufes dienende Heiz- bzw. Kühlleistung abhängig von mindestens einer Variablen, vorzugsweise der Fluidtemperatur ist.

5. Verfahren nach einem der vorhergehenden Ansprüche, dadurch gekennzeichnet, daß für den einzelnen Fühlvorgang auf die Strömungsgeschwindigkeit bzw. den Durchfluß des Fluids aus dem während der Beheizung bzw. Kühlung der Sonde (15) oder gegen Ende der Beheizung bzw. Kühlung stattfindendem instationären Sondentemparaturverlauf und/oder aus dem nach Beendigung der Beheizung bzw. Kühlung der Sonde (15) stattfindenden instationären Sondentemperaturverlauf geschlossen wird.

6. Verfahren nach einem der vorhergehenden Ansprüche, dadurch gekennzeichnet, daß die Beheizung und/oder Kühlung der Sonde (15) elektrisch erfolgt.

7. Verfahren nach einem der vorhergehenden Ansprüche, dadurch gekennzeichnet, daß während eines einzelnen Fühlvorganges aus dem instationären Sondentemperaturverlauf mehrfach die Strömungsgeschwindigkeit bzw. der Durchfluß ermittelt und aus diesen ermittelten Werten der Strömungsgeschwindigkeit bzw. des Durchflusses ein Mittelwert der Strömungsgeschwindigkeit bzw. des Durchflusses gebildet wird.

8. Verfahren nach einem der vorhergehenden Ansprüche, dadurch gekennzeichnet, daß bei dem einzelnen Fühlvorgang ab Beginn der Kühlung bzw. Beheizung der Sonde (15) eine vorbestimmte Zeitdauer abgemessen wird und aus der während dieser Zeitdauer stattfindenden Änderung der Sondentemperatur auf die Strömungsgeschwindigkeit bzw. den Durchfluß des Fluids geschlossen wird oder daß bei dem einzelnen Fühlvorgang eine vorbestimmte Änderung der Sondentemperatur erfaßt und aus der Zeitdauer, die vom Beginn der Beheizung bzw. Kühlung der Sonde (15) bis zum Erreichen dieser vorbestimmten Sondentemperaturänderung verstreicht, auf die Strömungsgeschwindigkeit bzw. den Durchfluß des Fluids geschlossen wird.

9. Verfahren nach Anspruch 8, dadurch gekennzeichnet, daß bei Erreichen des Endes der vorbestimmten Sondentemperaturänderung die Beheizung bzw. Kühlung der Sonde (15) für diesen Fühlvorgang beendet wird oder daß die Zeitdauer gemessen wird, die ab Beginn der Beheizung bzw. der Kühlung der Sonde (15) bis zum Erreichen einer vorbestimmten Sondentemperatur, die erst zeitlich nach Beendigung der Beheizung bzw. Kühlung auftritt, verläuft und aus dieser Zeitdauer auf die Strömungsgeschwindigkeit bzw. den Durchfluß des Fluids geschlossen wird.

10. Verfahren nach einem der Ansprüche 1-6, dadurch gekennzeichnet, daß aus der durch die Beheizung bzw. Kühlung der Sonde (15) ab Beginn der Beheizung bzw. Kühlung bewirkten, während des betreffenden Fühlvorganges auftretenden maximalen Veränderung der Sondentemperatur auf die Strömungsgeschwindigkeit bzw. den Durchfluß des Fluids geschlossen wird.

11. Verfahren nach einem der Ansprüche 1-7, dadurch gekennzeichnet, daß für den einzelnen Fühlvorgang der eine vorbestimmte Zeitdauer nach Beginn der Beheizung bzw. Kühlung der Sonde (15) oder bei einer vorbestimmten Sondentemperatur vorliegende Temperaturgradient dT/dt bzw. ΔT/Δt, wo T die Sondentemperatur und t die Zeit ist, des instationären Sondentemperaturverlaufes ermittelt und aus dieser zeitlichen Ableitung oder einer höheren zeitlichen Ableitung des instationären Sondentemperaturverlaufes auf die Strömungsgeschwindigkeit bzw. den Durchfluß des Fluids geschlossen wird.

12. Verfahren nach einem der vorhergehenden Ansprüche, dadurch gekennzeichnet, daß es zum in vorzugsweise vorbestimmten Zeitabständen erfolgenden Ermitteln der Strömungsgeschwindigkeit bzw. des Durchflusses des Fluids dient.

13. Verfahren nach einem der vorhergehenden Ansprüche, dadurch gekennzeichnet, daß die Sondentemperatur während des einzelnen Fühlvorganges auf eine konstante oder variable Bezugstemperatur, vorzugsweise auf die momentane, gefühlte Fluidtemperatur bezogen wird und/ oder daß zum Zeitpunkt des Beginns der Beheizung bzw. Kühlung der Sonde (15) für den einzelnen Fühlvorgang ihre gefühlte Eigentemperatur der Temperatur des Fluids entspricht.

14. Verfahren nach einem der vorhergehenden Ansprüche, dadurch gekennzeichnet, daß zum Zeitpunkt des Beginns der Beheizung bzw. Kühlung der Sonde (15) für den einzelnen Fühlvorgang die gefühlte Eigentemperatur der Sonde von der Temperatur des Fluids abweicht, vorzugsweise eine vorbestimmte Differenz zwischen dieser Eigentemperatur und der gefühlten Temperatur des Fluids vorliegt.

15. Verfahren nach Anspruch 13 oder 14, dadurch gekennzeichnet, daß die Sondentemperatur während eines einzelnen Fühlvorganges auf die zu Beginn dieses Fühlvorganges von dem innerhalb der Sonde (15) angeordneten Temperaturfühler (17) gefühlte Sondentemperatur bezogen wird.

16. Verfahren nach einem der vorhergehenden Ansprüche, dadurch gekennzeichnet, daß die Sondentemperatur außer von der Strömungsgeschwindigkeit bzw. dem Durchfluß noch von mindestens einer weiteren Variablen abhängig ist, die bei der Ermittlung der Strömungsgeschwindigkeit bzw. des Durchflusses mit berücksichtigt wird.

17. Verfahren nach einem der vorhergehenden Ansprüche, dadurch gekennzeichnet, daß die von der mindestens einen Wärmequelle (16) bzw. Kältequelle in die Sonde (15) eingebrachte Wärme bzw. aus ihr entnommene Wärme vollständig oder im wesentlichen in das Fluid eingeleitet bzw. aus ihm entnommen wird.

18. Einrichtung zum Fühlen der Strömungsgeschwindigkeit und/oder des Durchflusses eines Fluids, vorzugsweise einer Flüssigkeit, zur Durchführung des Verfahrens nach einem der vorhergehenden Ansprüche, welche Einrichtung eine Sonde (15) aufweist, die mindestens eine Wärmebzw. Kältequelle (16) und mindestens einen im Abstand von der Wärme- oder Kältequelle (16) angeordneten Temperaturfühler (17) für die Ermittlung der Sondentemperatur enthält, wobei ferner Auswertemittel (42) zum Ermitteln der Strömungsgeschwindigkeit und/oder des Durchflusses des Fluids aus mindestens einer Stelle und/ oder mindestens einem Bereich des während des einzelnen Fühlvorganges stattfindenden instationären Sondentemperaturverlaufs vorgesehen sind, dadurch gekennzeichnet, daß der Temperaturfühler (17) und die Wärme- bzw. Kältequelle (16) in einem von dem Fluid anströmbaren Körper (13 ; 37 ; 61) geringer Wärmeleitfähigkeit angeordnet sind, daß ein zumindest im wesentlichen innerhalb des Körpers (13 ; 37 ; 61) angeordneter metallischer Wärmeleiter (39 ; 64, 65, 69) vorgesehen ist, der unterbrechungsfrei zum Fluid führt und an seinem dem Fluid benachbarten Ende entweder vom Fluid beaufschlagt wird oder hier von ihm nur durch eine dünne, wärmedurchlässige Schicht getrennt ist, daß der Temperaturfühler (17) und die Wärme- bzw. Kältequelle (16) am metallischen Wärmeleiter (39 ; 64, 65, 69) oder in geringem Abstand von ihm so angeordnet sind, daß ausgeprägte Spreizung der instationären Sondentemperaturverläufe in Abhängigkeit der Strömungsgeschwindigkeit bzw. des Durchflusses erreicht wird.

19. Einrichtung nach Anspruch 18, dadurch gekennzeichnet, daß die Sonde (15) innerhalb eines dem Leiten des Fluids dienenden Rohres (10) angeordnet ist.

20. Einrichtung nach Anspruch 18 oder 19, dadurch gekennzeichnet, daß der metallische Wärmeleiter (39) der Sonde (15) zwischen der Wärme- bzw. Kältequelle (16) und dem Temperaturfühler (17) der Sonde angeordnet ist.

21. Einrichtung nach Anspruch 18 oder 20, dadurch gekennzeichnet, daß die Sonde (15) in einer Wandung eines dem Leiten des Fluids dienenden Rohres (10) angeordnet ist und mindestens eine von dem Fluid benetzbare Außenfläche aufweist.

22. Einrichtung nach einem der Ansprüche 18-21, dadurch gekennzeichnet, daß sie eine Zeitmeßvorrichtung (28) aufweist.

23. Einrichtung nach einem der Ansprüche 18-22, dadurch gekennzeichnet, daß die Wärme- bzw. Kältequelle (16) und/oder mindestens ein Temperaturfühler für die Sondentemperatur in die Sonde (15) eingebettet ist bzw. sind.

24. Einrichtung nach einem der Ansprüche 18-23, dadurch gekennzeichnet, daß der metallische Wärmeleiter (39) gabelförmig ausgebildet ist und die Wärme- bzw. Kältequelle (16) dem einen Gabelarm (73) und der Temperaturfühler (17) dem anderen Gabelarm (73') gegenüberliegt und der Fuß (71) des Wärmeleiters (39) von den Gabelarmen (73, 73') zum Fluid führt.

25. Einrichtung nach einem der Ansprüche 18-24, dadurch gekennzeichnet, daß sie Schaltmittel, vorzugsweise Zeitschaltmittel (20, 21), zum Einschalten bzw. Ausschalten der Wärme- bzw. Kältequelle (16) aufweist.

26. Einrichtung nach einem der Ansprüche 18-25, dadurch gekennzeichnet, daß sie Steuer- und/oder Regelmittel zum Steuern bzw. Regeln ihrer Heiz- bzw. Kühlleistung und/oder der der Sonde beim einzelnen Fühlvorgang zuzuführenden bzw. zu entziehenden Wärmemenge aufweist.

27. Einrichtung nach einem der Ansprüche 18-26, dadurch gekennzeichnet, daß der Temperaturfühler (17) der Sonde durch eine temperaturempfindliche, integrierte Schaltung, die vorzugsweise mindestens einen Transistor aufweist, gebildet ist.

28. Einrichtung nach einem der Ansprüche 18-27, dadurch gekennzeichnet, daß die Wärme- bzw. Kältequelle (16) und/oder der Temperaturfühler (17) in einem Hohlraum eines Sondenkörpers (39) geringer Wärmeleitfähigkeit angeordnet ist bzw. sind.

29. Einrichtung nach einem der Ansprüche 18-28, dadurch gekennzeichnet, daß der die Sondentemperatur fühlende Temperaturfühler (17) auch der die jeweilige Bezugstemperatur, auf die die instationäre Sondentemperatur während des jeweiligen Fühlvorganges bezogen wird, fühlende Temperaturfühler ist.

30. Einrichtung nach einem der Ansprüche 18-28, dadurch gekennzeichnet, daß stromaufwärts der Sonde (15) oder an einer anderen von der Temperatur der Sonde unbeeinflußten Stelle ein Fühler (24) zum Fühlen der Fluidtemperatur als Bezugstemperatur für die Sondentemperatur angeordnet ist.

31. Einrichtung nach einem der Ansprüche 18-30, dadurch gekennzeichnet, daß sie der zahlenmässigen Messung der Strömungsgeschwindigkeit und/oder des Durchflusses des Fluids dient.

32. Verwendung einer Einrichtung nach einem der Ansprüche 18-31 für einen Wärmemengenzähler zum in Zeitabständen erfolgenden Fühlen der Strömungsgeschwindigkeit bzw. des Durchflusses des Wärmeträgermedhiums für die Wärmemengenzählung.

## Claims

1. A method of sensing the flow rate of a fluid, preferably a liquid, and/or of the flow of a fluid through a pipe or the like, the sensing of the flow rate or of the flow of the fluid being effected intermittently in separate time-consuming sensing operations, which preferably succeed one another at specified time intervals, the individual sensing operation being carried out by means of a probe (15) against which the fluid flows. the probe (15) having inside it at least one heat source or cold source (16) which is in heat-conducting contact with the fluid adjacent to the probe, the probe (15) further having at least one position in its interior for detecting the probe temperature, the temperature of this position being capable of being detected by means of a temperature sensor (17) mounted inside the probe (15), and the probe having heat applied to it or drawn from it by its heat source (16) or cold source in a specified amount and/or with a specified heating or cooling power in order to carry out an individual sensing operation, in such a manner that the probe temperature receives — as a result of the heat exchange between the probe and the fluid, which is a function of the flow rate or the flow of the fluid and which takes place during the sensing operation concerned — a curve which changes temporarily, and which is consequently called the non-stationary probe temperature curve, this curve being a function of the flow rate or flow of the fluid, and in that the flow rate or flow of the fluid can be deduced from at least one point and/or at least one region of this non-stationary probe temperature curve which occurs during the individual sensing operation, characterised in that the probe (15) comprises a body (13 ; 37 ; 61) of low heat conductivity, against which the fluid flows and in which the heat or cold source (16) and the temperature sensor (17) are mounted, in that the heat or cold source (16) changes, from a position inside the probe, the temperature of a metal heat conductor (39 ; 64, 65, 69) disposed at least substantially inside the body (13 ; 37 ; 61), this position being located on the metal heat conductor (39 ; 64, 65, 69) or at a slight distance therefrom. the metal heat conductor (39 ; 64, 65, 69) leading without interruption to the fluid. and the end of the metal heat conductor (39 ; 64, 65, 69) adjacent to the fluid either being acted upon by the fluid or being separated from the fluid at that point by only a thin layer, in that the temperature sensor (17) senses the probe temperature at a distance from the heat or cold source on the metal heat conductor or at a slight distance therefrom, and in that the heat or cold flow effected by the heat or could source in the metal heat conductor is conducted to the fluid and the temperature sensor (17) in such a manner that a pronounced separation of the non-stationary probe temperature curves (30, 31, 32 ; 30', 31', 32' ; 33 ; 23') occurs as a function of the flow rate or flow.

2. A method according to claim 2, characterised in that the heating or cooling of the probe (15) for the individual sensing operation is effected by supplying or withdrawing a specified amount of heat, in which case this amount of heat may be preferably constant or may be a function of at least one variable, preferably the fluid temperature.

3. A method according to claim 1 or 2, characterised in that the heating or cooling of the probe (15) for the individual sensing operation is effected by means of a specified time curve of the heating or cooling power for heating or cooling the probe (15), preferably with a constant heating or cooling power.

4. A method according to one of the preceding claims, characterised in that the heating or cooling of the probe (15) for the individual sensing operation is carried out for a specified duration and/or in a pulse-like manner and/or the heating or cooling power for generating a non-stationary probe temperature curve is a function of at least one variable, preferably the fluid temperature.

5. A method according to one of the preceding claims, characterised in that for the individual sensing operation, the flow rate or flow of the fluid can be deduced from the non-stationary probe temperature curve occurring during the heating or cooling of the probe (15) or towards the end of heating or cooling and/or from the non-stationary probe temperature curve occurring after completion of heating or cooling of the probe (15).

6. A method according to one of the preceding claims, characterised in that the heating and/or cooling of the probe (15) is effected electrically.

7. A method according to one of the preceding claims, characterised in that during an individual sensing operation, the flow rate or flow can be determined more than once from the non-stationary probe temperature curve, and from these determined values of the flow rate or flow, a mean value for the flow rate or flow can be formed.

8. A method according to one of the preceding claims, characterised in that in the individual sensing operation, from the start of cooling or heating of the probe (15), a specified time duration is measured, and from the change in the probe temperature taking place during this period, the flow rate or flow of the fluid is deduced, or in that in the individual sensing operation a specified change in the probe temperature is detected, and from the time duration from the start of heating or cooling of the probe (15) to the attainment of this specified probe temperature change the flow rate or flow of the fluid is deduced.

9. A method according to claim 6, characterised in that when the end of the specified probe temperature change has been reached, the heating or cooling of the probe (15) for this sensing operation is ended, or in that the time duration is measured extending from the start of heating or cooling of the probe (15) to the attainment of a specified probe temperature which only arises temporarily after the end of heating or cooling, and from this duration the flow rate or flow of the fluid is deduced.

10. A method according to one of claims 1-6, characterised in that from the maximum change of the probe temperature effected by the heating or cooling of the probe (15) from the start of heating or cooling and occurring during the sensing operation concerned, the flow rate or flow of the fluid is deduced.

11. A method according to one of claims 1-7, characterised in that that for the individual sensing operation, the temperature gradient of the non-stationary probe temperature curve, $dT/dt$ or $\Delta T/\Delta t$ (where T is the probe temperature and t is time), which exists for a specified duration after the start of heating or cooling of the probe (15) or in the case of a specified probe temperature, is determined, and from this temporary differentiation or from higher temporary differentiation of the non-stationary probe temperature curve the flow rate or flow of the fluid is deduced.

12. A method according to one of the preceding claims, characterised in that it is intended for determining, preferably at specified intervals, the flow rate or flow of the fluid.

· 13. A method according to one of the preceding claims, characterised in that the, probe temperature during the individual sensing operation is related to a constant or variable reference temperature, preferably to the momentary, sensed fluid temperature, and/or in that, at the moment when heating or cooling of the probe (15) starts for the individual sensing operation, its sensed inherent temperature corresponds to the temperature of the fluid.

14. A method according to one of the preceding claims, characterised in that, at the moment when heating or cooling of the probe (15) starts for the individual sensing operation, the sensed inherent temperature of the probe deviates from the temperature of the fluid, preferably a specified difference exists between this inherent temperature and the sensed temperature of the fluid.

15. A method according to claim 13 or 14, characterised in that the probe temperature during an individual sensing operation is related to the probe temperature sensed at the start of this sensing operation by the temperature sensor (17) mounted inside the probe.

16. A method according to one of the preceding claims, characterised in that the probe temperature is dependent on at least one further variable, in addition to the flow rate or the flow, which is also taken into account in determining the flow rate or flow.

17. A method according to one of the preceding claims, characterised in that the heat imparted to or drawn from the probe (15) by the heat source (16) or cold source, of which there is at least one, is completely or substantially transmitted to the fluid or drawn therefrom.

18. A device for sensing the flow rate and/or the flow of a fluid, preferably a liquid, for carrying out the method according to one of the preceding claims, the device having a probe (15), which comprises at least one heat or cold source (16) and at least one temperature sensor (17) arranged at a distance from the heat or cold source (16) for determining the probe temperature. evaluating means (42) additionally being provided for determining the flow rate and/or the flow of the fluid from at least one position and/or at least one region of the non-stationary probe temperature curve occurring during the individual sensing operation, characterised in that the temperature sensor (17) and the heat or cold source (16) are mounted in a body (13 ; 37 ; 61) of low heat conductivity against which the fluid may flow, in that a metal heat conductor (39 ; 64, 65, 69) mounted at least substantially inside the body (13 ; 37 ; 61) is provided, which leads to the fluid without interruption and which is either acted upon by the fluid at its end adjacent to the fluid or which is separated at this point from the fluid only by a thin, heat-permeable layer, in that the temperature sensor (17) and the heat or cold source (16) are so arranged against the metal heat conductor (39 ; 64, 65, 69) or at a slight distance therefrom that pronounced separation of the non-stationary probe temperature curves is achieved as a function of the flow rate or of the flow.

19. A device according to claim 18, characterised in that the probe (15) is mounted inside a tube (10) for conducting the fluid.

20. A device according to claim 18 or 19, characterised in that the metal heat conductor (39) of the probe (15) is mounted between the heat or cold source (16) and the temperature sensor (17) of the probe.

21. A device according to claim 18 or 20, characterised in that the probe (15) is mounted in a wall of a tube (10) for conducting the fluid and has at least one outer surface which may be wet by the fluid.

22. A device according to one of claims 16-21, characterised in that it has a timer.

23. A device according to one of claims 18-22, characterised in that the or cold source (16) and/or at least one temperature sensor for the probe temperature is or are embedded in the probe (15).

24. A device according to one of claims 18-23, characterised in that the metal heat conductor (39) is fork-shaped and the heat or cold source (16) is opposite the one fork prong (73) and the temperature sensor (17) is opposite the other fork prong (73') and the foot (71) of the heat conductor (39) leads from the fork prongs (73, 73') to the fluid.

25. A device according to one of claims 18-24, characterised in that it comprises switching means, preferably time switch means (20, 21), for switching the heat or cold source (16) on and off.

26. A device according to one of claims 18-25, characterised in that it comprises control means and/or adjusting means for controlling or adjusting its heating or cooling power and/or the amount of heat supplied to or drawn from the probe in the individual sensing operation.

27. A device according to one of claims 18-26, characterised in that the temperature sensor (17) of the probe is formed by a temperature sensitive, integrated circuit, which preferably comprises at least one transistor.

28. A device according to one of claims 18-27, characterised in that the heat or cold source (16) and/or the temperature sensor (17) is or are mounted in a hollow of a probe body (39) of low heat conductivity.

29. A device according to one of claims 16-28, characterised in that the temperature sensor (17) for sensing the probe temperature is also the temperature sensor which senses the respective reference temperature to which the non-stationary probe temperature is related during the respective sensing operation.

30. A device according to one of claims 16-28, characterised in that a sensor (24) for sensing the fluid temperature as a reference temperature for the probe temperature is disposed upstream of the probe (15) or at another point unaffected by the temperature of the probe.

31. A device according to one of claims 18-30, characterised in that it is intended for the numerical measurement of the flow rate and/or of the flow of the fluid.

32. A use of a device according to one of claims 18-31 for a calorimeter for sensing at time intervals the flow rate or flow of the heat carrier medium for calorimetry.

**Revendications**

1. Procédé pour mesurer la vitesse d'écoulement d'un fluide, de préférence d'un liquide, et/ou le débit d'un fluide à travers une conduite ou similaire, la mesure de la vitesse d'écoulement ou, respectivement, du débit du fluide ayant lieu de manière discontinue en des processus de mesure individuels demandant du temps qui se produisent de préférence l'un après l'autre à des intervalles de temps prédéterminés, le processus de mesure individuel ayant lieu à l'aide d'une sonde (15) qui est balayée par le fluide en écoulement, l'intérieur de ladite sonde (15) comportant au moins une source de chaleur ou, respectivement, une source de froid (16) qui est en liaison thermoconductrice avec le fluide contigu à la sonde, la sonde (15) comportant en outre à l'intérieur d'elle, en vue de la détermination d'une température de la sonde, au moins un endroit dont la température peut être mesurée au moyen d'un capteur de température (17) disposé à l'intérieur de la sonde (15), et de la chaleur étant amenée ou retirée à la sonde en un dosage prédéterminé et/ou avec une puissance de chauffage ou, respectivement, de refroidissement prédéterminée, en vue de la réalisation d'un processus individuel de mesure de la vitesse d'écoulement ou, respectivement, du débit du fluide au moyen de sa source au moins de chaleur (16) ou, respectivement, de froid, de telle manière que la température de la sonde, du fait de l'échange de chaleur qui a lieu entre la sonde et le fluide pendant le processus de mesure concerné et qui dépend de la vitesse d'écoulement ou, respectivement, du débit du fluide, suive une évolution variant dans le temps — appelée par la suite « évolution ou courbe transitoire de la température de la sonde » — qui dépend de la vitesse d'écoulement ou, respectivement, du débit du fluide, et que l'on déduit la vitesse d'écoulement ou, respectivement, le débit du fluide d'au moins un point et/ou d'au moins une zone de cette évolution transitoire de la température de la sonde qui a lieu au cours du processus de mesure individuel, caractérisé par le fait que la sonde (15) comporte un corps (13 ; 37 ; 61) de faible conductibilité thermique qui est en contact avec l'écoulement du fluide et dans lequel sont disposés la source de chaleur ou, respectivement, de froid (16) et le capteur de température (17), par le fait que la source de chaleur ou, respectivement, de froid (16) modifie la température d'un conducteur de chaleur métallique (39 ; 64, 65, 69) disposé, du moins pour l'essentiel, à l'intérieur du corps (13 ; 37 ; 61), depuis un endroit qui est situé à l'intérieur de la sonde et qui se trouve sur le conducteur de chaleur métallique (39 ; 64, 65, 69) ou à faible distance de lui, cependant que ledit conducteur de chaleur métallique (39 ; 64, 65, 69) conduit au fluide sans interruption et qu'à son extrémité contiguë au fluide, soit il est frappé par le fluide, soit il n'en est séparé à cet endroit que par une couche mince, par le fait que le capteur de température (17) capte la température de la sonde sur le conducteur de chaleur métallique ou à faible distance de lui, à distance de la source de chaleur ou, respectivement, de froid, et par le fait que l'écoulement de chaleur ou, respectivement, de froid qui est produit par la source de chaleur ou, respectivement, de froid dans le conducteur de chaleur métallique est amené au fluide et au capteur de température (17) de telle manière qu'il se produise un écartement marqué des courbes transitoires de la température de la sonde (30, 31, 32 ; 30', 31', 32' ; 33 ; 23') en fonction de la vitesse d'écoulement ou, respectivement, du débit.

2. Procédé selon la revendication 1, caractérisé par le fait que le chauffage ou, respectivement, le refroidissement de la sonde (15) pour le processus de mesure individuel a lieu par amenée ou, respectivement, enlèvement d'une quantité de chaleur prédéterminée, cette quantité de chaleur pouvant être de préférence constante ou dépendante d'au moins une variable, de préférence de la température du fluide.

3. Procédé selon la revendication 1 ou 2, caractérisé par le fait que le chauffage ou, respectivement, le refroidissement de la sonde (15) pour le processus de mesure individuel a lieu au moyen d'une évolution dans le temps prédéterminée de la puissance de chauffage ou, respectivement, de refroidissement qui sert à son chauffage ou, respectivement, à son refroidissement, de préférence avec une puissance de chauffage ou, respectivement, de refroidissement qui est constante.

4. Procédé selon l'une des revendications précédentes, caractérisé par le fait que le chauffage ou, respectivement, le refroidissement de la sonde (15) pour le processus de mesure individuel a lieu pendant une durée prédéterminée et/ou par impulsions, et/ou que la puissance de chauffage ou, respectivement, de refroidissement qui sert à engendrer une évolution transitoire de la température de la sonde dépend d'au moins une variable, de préférence de la température du fluide.

5. Procédé selon l'une des revendications précédentes, caractérisé par le fait que, pour le processus de mesure individuel, on déduit la vitesse d'écoulement ou, respectivement, le débit du fluide de l'évolution transitoire de la température de la sonde qui a lieu pendant le chauffage ou, respectivement, le refroidissement de la sonde (15) ou vers la fin du chauffage ou, respectivement, du refroidissement, et/ou de l'évolution transitoire de la température de la sonde qui a lieu après l'achèvement du chauffage ou, respectivement, du refroidissement de la sonde (15).

6. Procédé selon l'une des revendications précédentes, caractérisé par le fait que le chauffage ou, respectivement, le refroidissement de la sonde (15) est électrique.

7. Procédé selon l'une des revendications précédentes, caractérisé par le fait que l'on détermine plusieurs fois la vitesse d'écoulement ou, respectivement, le débit du fluide au cours d'un processus de mesure individuel, à partir de l'évolution transitoire de la température de la sonde, et qu'à partir de ces valeurs mesurées de la vitesse d'écoulement ou, respectivement, du débit du fluide, on forme une valeur moyenne de la vitesse d'écoulement ou, respectivement, du débit.

8. Procédé selon l'une des revendications précédentes, caractérisé par le fait que, lors du processus de mesure individuel, on mesure à partir du début du chauffage ou, respectivement, du refroidissement de la sonde (15) un intervalle de temps prédéterminé et que l'on déduit la vitesse d'écoulement ou, respectivement, le débit du fluide de la variation de la température de la sonde qui se produit au cours de cet intervalle de temps, ou par le fait que, lors du processus de mesure individuel, on détermine une variation prédéterminée de la température de la sonde et on déduit la vitesse d'écoulement ou, respectivement, le débit du fluide de l'intervalle de temps qui s'écoule depuis le début du chauffage ou, respectivement, du refroidissement de la sonde (15) jusqu'au moment où l'on atteint cette variation prédéterminée de la température de la sonde.

9. Procédé selon la revendication 8, caractérisé par le fait que, lorsque l'on a atteint la fin de la variation prédéterminée de la température de la sonde, on arrête le chauffage ou, respectivement, le refroidissement de la sonde (15) pour ce processus de mesure, ou par le fait que l'on mesure l'intervalle de temps qui s'écoule depuis le début du chauffage ou, respectivement, du refroidissement de la sonde (15) jusqu'à ce que l'on atteigne une température de la sonde prédéterminée qui ne se produit dans le temps qu'après la fin du chauffage ou, respectivement, du refroidissement, et que l'on déduit la vitesse d'écoulement ou, respectivement, le débit du fluide de cet intervalle de temps.

10. Procédé selon l'une des revendications 1 à 6, caractérisé par le fait que l'on déduit la vitesse d'écoulement ou, respectivement, le débit du fluide de la variation maximale de la température de la sonde qui est produite par le chauffage ou, respectivement, le refroidissement de la sonde (15) depuis le début du chauffage ou, respectivement, du refroidissement, et qui intervient au cours du processus de mesure concerné.

11. Procédé selon l'une des revendications 1 à 7, caractérisé par le fait que, lors du processus de mesure individuel, on détermine le gradient de température dT/dt ou, respectivement, $\Delta T/\Delta t$, de la courbe transitoire de la température de la sonde, où T est la température de la sonde et t le temps, qui est présent à un intervalle de temps prédéterminé après le début du chauffage ou, respectivement, du refroidissement de la sonde (15) ou pour une température de la sonde prédéterminée, et que l'on déduit la vitesse d'écoulement ou, respectivement, le débit du fluide de cette dérivée par rapport au temps ou d'une dérivée par rapport au temps d'un ordre plus élevé de la courbe transitoire de la température de la sonde.

12. Procédé selon l'une des revendications précédentes, caractérisé par le fait qu'il sert à déterminer la vitesse d'écoulement ou, respectivement, le débit du fluide à des intervalles de temps qui sont de préférence prédéterminés.

13. Procédé selon l'une des revendications précédentes, caractérisé par le fait que la température de la sonde, au cours du processus de mesure individuel, est rapportée à une température de référence constante ou variable, de préférence à la température instantanée du fluide qui est mesurée, et/ou par le fait qu'au moment du début du chauffage ou, respectivement, du refroidissement de la sonde (15) pour le processus de mesure individuel, sa température propre qui est mesurée correspond à la température du fluide.

14. Procédé selon l'une des revendications précédentes, caractérisé par le fait qu'au moment du début du chauffage ou, respectivement, du refroidissement de la sonde (15) pour le processus de mesure individuel, la température propre mesurée de la sonde diffère de la température du fluide, et qu'il existe de préférence une différence prédéterminée entre cette température propre et la température mesurée du fluide.

15. Procédé selon la revendication 13 ou 14, caractérisé par le fait que la température de la sonde au cours d'un processus de mesure individuel est rapportée à la température de la sonde qui est mesurée au début de ce processus de mesure par le capteur de température (17) disposé à l'intérieur de la sonde (15).

16. Procédé selon l'une des revendications précédentes, caractérisé par le fait que la température de la sonde, outre la vitesse d'écoulement ou, respectivement, le débit, dépend aussi d'au moins une autre variable qui est prise en considération lors de la détermination de la vitesse d'écoulement ou, respectivement, du débit.

17. Procédé selon l'une des revendications précédentes, caractérisé par le fait que la chaleur qui est apportée à la sonde (15) par au moins une source de chaleur (16) ou, respectivement, qui lui est enlevée par une source de froid, est totalement ou pour l'essentiel envoyée dans le fluide, ou, respectivement, retirée de lui.

18. Dispositif pour mesurer la vitesse d'écoulement et/ou le débit d'un fluide, de préférence d'un liquide, pour la mise en œuvre du procédé selon l'une des revendications précédentes, ledit dispositif comportant une sonde (15) qui comprend au moins une source de chaleur ou, respectivement, de froid (16) et au moins un capteur de température (17) disposé à distance de la source de chaleur ou, respectivement, de froid (16) pour la détermination de la température de la sonde, des moyens d'exploitation des données (42) étant en outre prévus pour la détermination de la vitesse d'écoulement et/ou du débit du fluide à partir d'au moins un point et/ou d'au moins une zone de l'évolution transitoire de la température de la sonde qui a lieu au cours du processus de mesure individuel, caractérisé par le fait que le capteur de température (17) et la source de chaleur ou, respectivement, de froid (16) sont disposés dans un corps (13 ; 37 ; 61) de faible conductibilité thermique qui peut être balayé par l'écoulement du fluide, par le fait qu'il est prévu un conducteur de chaleur métallique (39 ; 64, 65, 69) qui est disposé, du moins pour l'essentiel, à l'intérieur du corps (13 ; 37 ; 61), qui conduit au fluide sans interruption et qui, à son extrémité contiguë au fluide, soit est frappé par le fluide, soit n'en est séparé à cet endroit que par une couche mince perméable à la chaleur, par le fait que le capteur de température (17) et la source de chaleur ou, respectivement, de froid (16) sont disposés sur le conducteur de chaleur métallique (39 ; 64, 65, 69), ou à faible distance de celui-ci, de telle manière que l'on obtienne un écartement marqué des courbes transitoires de température de la sonde en fonction de la vitesse d'écoulement ou, respectivement, du débit.

19. Dispositif selon la revendication 18, caractérisé par le fait que la sonde (15) est disposée à l'intérieur d'un tube (10) qui sert à conduire le fluide.

20. Dispositif selon la revendication 18 ou 19, caractérisé par le fait que le conducteur de chaleur métallique (39) de la sonde (15) est disposé entre la source de chaleur ou, respectivement, de froid (16) et le capteur de température (17).

21. Dispositif selon la revendication 18 ou 20, caractérisé par le fait que la sonde (15) est disposée dans une paroi d'un tube (10) qui sert à conduire le fluide et qu'elle comporte au moins une surface extérieure qui peut être mouillée par le fluide.

22. Dispositif selon l'une des revendications 18 à 21, caractérisé par le fait qu'il comporte un dispositif de mesure du temps (28).

23. Dispositif selon l'une des revendications 18 à 22, caractérisé par le fait que la source de chaleur ou, respectivement, de froid (16) et/ou au moins un capteur de température pour la température de la sonde est ou sont inséré(s) dans la sonde (15).

24. Dispositif selon l'une des revendications 18 à 23, caractérisé par le fait que le conducteur de chaleur métallique (39) est réalisé sous la forme d'une fourche, que la source de chaleur ou, respectivement, de froid (16) est disposée en face de l'une des branches (73) de la fourche et le capteur de température (17) en face de l'autre branche (73') de la fourche, et que le pied (71) du conducteur de chaleur métallique (39) conduit des branches (73, 73') de la fourche au fluide.

25. Dispositif selon l'une des revendications 18 à 24, caractérisé par le fait qu'il comporte des moyens de commutation, de préférence des moyens de commutation à minuterie (20, 21), pour mettre en circuit ou hors circuit la source de chaleur ou, respectivement, de froid (16).

26. Dispositif selon l'une des revendications 18 à 25, caractérisé par le fait qu'il comporte des moyens de commande et/ou de régulation pour commander ou, respectivement, réguler sa puissance de chauffage ou, respectivement, de refroidissement, et/ou la quantité de chaleur à apporter ou, respectivement, à enlever à la sonde lors du processus de mesure individuel.

27. Dispositif selon l'une des revendications 18 à 26, caractérisé par le fait que le capteur de température (17) de la sonde est constitué par un circuit intégré sensible à la température qui comporte de préférence au moins un transistor.

28. Dispositif selon l'une des revendications 18 à 27, caractérisé par le fait que la source de chaleur ou, respectivement, de froid (16) et/ou le capteur de température (17) est ou sont disposé(s), respectivement, dans une cavité d'un corps de sonde (39) à faible conductibilité thermique.

29. Dispositif selon l'une des revendications 18 à 28, caractérisé par le fait que le capteur de température (17) qui mesure la température de la sonde est également le capteur de température qui mesure chaque température de référence à laquelle est rapportée la température transitoire de la sonde au cours du processus de mesure correspondant.

30. Dispositif selon l'une des revendications 18 à 28, caractérisé par le fait qu'un capteur (24) destiné à mesurer la température du fluide comme température de référence pour la température de la sonde est disposé en amont de la sonde (15) ou en autre endroit qui n'est pas influencé par la température de la sonde.

31. Dispositif selon l'une des revendications 18 à 30, caractérisé par le fait qu'il sert à la mesure numérique de la vitesse d'écoulement ou, respectivement, du débit du fluide.

32. Utilisation d'un dispositif selon l'une des revendications 18 à 31 dans un compteur de quantités de chaleur pour mesurer à des intervalles de temps consécutifs la vitesse d'écoulement ou, respectivement, le débit du milieu caloporteur en vue de la mesure des quantités de chaleur.

FIG.1

FIG.9

FIG.2

FIG.3

FIG.6

FIG.8

FIG.10

FIG.5

FIG.4

FIG.7

FIG.12

FIG.11

4